# EUROPEAN PATENT APPLICATION

(11) **EP 4 687 085 A1**
(43) Date of publication of application: **04.02.2026**
(21) Application number: 25193208.3
(22) Date of filing: 31.07.2025
(51) Int. Cl.: G06Q 10/0635, G06Q 50/18, G06F 40/30

(54) **HIERARCHICAL COMPLIANCE ANALYSIS OF ELECTRONIC WORKING DOCUMENTS**

(30) Priority: 31.07.2024 US 202418790997
(71) Applicant: DocuSign, Inc., San Francisco, CA 94105 (US)
(72) Inventor: Zheng, Yiting, Chicago (US); Selman, Daniel Charles, Winchester (GB); Turner, Mariam Badiei, Charlotte (US)
(74) Representative: Meissner Bolte Nürnberg

(57) **Abstract**

Techniques are described for a system comprising processing circuitry and computer readable media comprising instructions that, when executed, cause the processing circuitry to determine, for a working document associated with an entity, a working attribute embedding that characterizes attributes for the working document. The instructions may further cause the processing circuitry to select, based on a plurality of compliance attribute embeddings associated with a plurality of historical documents and the working attribute embedding, a plurality of compliance documents from the plurality of historical documents. The instructions may further cause the processing circuitry to determine a compliance report based on a plurality of working document clauses of the working document and a plurality of compliance clauses of the plurality of compliance documents. The instructions may further cause the processing circuitry to output an indication of the compliance report.

## Description

This application claims the benefit of US Patent Application No. 18/790,997, filed 31 July 2024, the entire contents of which is incorporated herein by reference.

This disclosure relates generally to electronic document management.

Determining risk of agreement documents under negotiation as part of a pending transaction may be a time and computational resource intensive process. For example, contract managers of an entity involved in the transaction may have to manually open multiple files and conduct an analysis of potential issues to present to a supervising legal professional during negotiations of an agreement document.

In some examples, entities or corporations may determine whether an unexecuted agreement document is compliant with company policies based on playbooks that outline rules for various types of contract agreements. Analyzing compliance of an unexecuted agreement document using playbooks may still rely on extensive manual review that is a time and computational resource intensive process. For example, an entity may spend a significant amount of time and computational resources (e.g., memory storage, processing power, etc.) to develop playbooks for every type of agreement document (e.g., master service agreement, lease agreement, employment agreement, etc.). Generally, a contract manager of an entity with a playbook may determine compliance of an agreement document with respect to the playbook by manually opening multiple files and conducting an analysis of potential issues to present to a supervising legal professional.

Embodiments according to the invention are disclosed in particular in the appended claims. Aspects and/or embodiments of the present disclosure describe techniques for analyzing compliance of electronic documents for an entity according to historical documents for the entity. Historical documents for an entity may include, for example, agreement documents executed by the entity, company policies implement by the entity, other documents associated with the entity, or publicly available documents (e.g., from EDGAR). The document management system may receive a working document from an entity (e.g., a company). In some instances, the document management system may receive the working document from a user device operated by a member (e.g., employee, contractor, etc.) of the entity with a request to determine compliance of the working document with respect to the historical documents. In some examples, the document management system may deploy a software application to one or more computing devices or computing systems owned by the entity to allow the entity to send working documents for a compliance analysis in accordance with the techniques described herein. For example, the document management system may send data for a software application client to a computing system owned by an entity. The computing system owned by the entity may execute the software application client to send a working document to the document management platform to determine whether the working document is compliant. The document management system may determine compliance of working documents by implementing a hierarchical compliance analysis in accordance with the techniques described herein.

For example, the document management system may select, at a first level of the hierarchical compliance analysis, a subset of historical documents as one or more compliance documents based on attribute embeddings for the historical documents and an attribute embedding for the working document. Attribute embeddings may characterize attributes of a document such as an agreement type, a price term (e.g., total value of an agreement, monthly payments associated with a contract, a price of a product associated with the contract, etc.), a counterparty, a product, a product quantity, a geographical region, or the like. By the document management system selecting a subset of historical documents as compliance documents, the document management system may reduce computational resources associated with developing, storing, and applying compared to systems that use all historical documents. For example, the document management system may automatically select a subset of historical documents for a compliance analysis to reduce a total number of contextual extractions of historical documents when identifying differences between a working document (e.g., the number of historical documents in which linguistic concepts are identified and compared to identified linguistic concepts of a working document). In this way, the document management system, according to the techniques described herein, may reduce memory usage, processing burden, power consumption, and/or other computational resources associated with analyzing content of historical documents. In some examples, additionally or alternatively, the document management system may, according to the techniques described herein, identify compliance issues of working documents that may not have been identified when performing a compliance analysis of working documents based on playbooks. For instance, the document management system may identify an issue with respect to non-compliance of a working document that may not have been specified in rules of a playbook.

At a second level of the hierarchical compliance analysis, the document management system may identify clauses of the working document and the selected subset of historical documents as compliance documents. The document management system may automatically (e.g., using one or more machine learning models such as generative machine learning models and/or traditional machine learning models) identify clauses of a document such as clauses of an agreement contract (e.g., indemnity clause, limitation of liability clause, governing law clause, etc.). In some examples, the document management system may identify clauses of a document such as sections, requirements, passages, articles, stipulations, or provisions included in the document, definitions included in the document, scope of the document, term or termination specified in the document, amendments to the document, notices included in the document, schedules included in the document, and appendices included in the document. The document management system may determine a compliance report based on identified clauses of the working document and identified clauses of selected compliance documents. The document management system may generate a compliance report to include an indication of whether the working document is compliant with respect to the selected compliance documents. The document management system may determine whether the working document is compliant with respect to the selected compliance documents based on the identified clauses of the working document and the identified clauses of the selected compliance documents. For instance, the document management system may compare (e.g., using a large language model) content of the identified clauses of the working document and the identified clauses of the compliance documents.

The document management system may output an indication of the compliance report including the indication of whether the working document is compliant with respect to the selected compliance documents. **In** this way, the document management system may generate and output an indication of whether there are issues with a working document (e.g., terms of a working document under negotiation in a transaction that conflict with terms of selected compliance documents), thereby reducing the time and computational resources a member of an entity has to use when identifying the issues with the working document for further legal review. For example, rather than a contract manager of an entity opening multiple documents and performing a manual compliance analysis, the document management system may automatically identify whether a working document may pose a potential risk based on the hierarchical compliance analysis as described herein.

The document management system may, in some examples, include one or more subsequent levels in the hierarchical compliance analysis of a working document. For example, the document management system may generate comparison data that includes a summary indicating one or more similarities between the working document and the selected compliance documents and/or one or more differences between the working document and the selected compliance documents. The document management system may generate a compliance report further based on the comparison data. For example, the document management system may generate a compliance report to include a summary of material differences between identified clauses of a working document and identified clauses of selected compliance documents. In this way, the document management system may perform a compliance analysis of a working document at various granularities, thereby reducing manual effort and computational resources (e.g., memory, processing cycles, etc.) based on a desired granularity of an automated compliance analysis performed by the document management system.

In one example, a system comprises processing circuitry and computer readable media comprising instructions that, when executed, cause the processing circuitry to determine, for a working document associated with an entity, a working attribute embedding that characterizes attributes for the working document. The instructions may further cause the processing circuitry to select, based on a plurality of compliance attribute embeddings associated with a plurality of historical documents and the working attribute embedding, a plurality of compliance documents from the plurality of historical documents. The instructions may further cause the processing circuitry to determine a compliance report based on a plurality of working document clauses of the working document and a plurality of compliance clauses of the plurality of compliance documents. The instructions may further cause the processing circuitry to output an indication of the compliance report.

In another example, a method may include determining, by processing circuitry, for a working document associated with an entity, a working attribute embedding that characterizes attributes for the working document. The method may further include selecting, by the processing circuitry, based on a plurality of compliance attribute embeddings associated with a plurality of historical documents and the working attribute embedding, a plurality of compliance documents from the plurality of historical documents. The method may further include determining, by the processing circuitry, a compliance report based on a plurality of working document clauses of the working document and a plurality of compliance clauses of the plurality of compliance documents. The method may further include outputting, by the processing circuitry, an indication of the compliance report.

In yet another example, computer-readable storage media encoded with instructions that, when executed, causes processing circuitry to determine, for a working document associated with an entity, a working attribute embedding that characterizes attributes for the working document. The instructions may further cause the processing circuitry to select, based on a plurality of compliance attribute embeddings associated with a plurality of historical documents and the working attribute embedding, a plurality of compliance documents from the plurality of historical documents. The instructions may further cause the processing circuitry to determine a compliance report based on a plurality of working document clauses of the working document and a plurality of compliance clauses of the plurality of compliance documents. The instructions may further cause the processing circuitry to output an indication of the compliance report.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF THE DRAWINGS

FIG. 1 is a block diagram illustrating an example computing environment for hierarchical compliance analysis of electronic working documents, in accordance with the techniques of this disclosure.
FIG. 2 is a block diagram illustrating an example document management platform for hierarchical compliance analysis of electronic working documents, in accordance with techniques of this disclosure.
FIG. 3 is a conceptual diagram illustrating an example agreement document compliance analyzer for generating comparison data for an example electronic working document, in accordance with one or more techniques of this disclosure.
FIG. 4 is a conceptual diagram illustrating an example graphical user interface for displaying a compliance report, in accordance with techniques of this disclosure.
FIG. 5 is a conceptual diagram illustrating an example operation of hierarchical compliance analysis of an electronic working document, in accordance with techniques of this disclosure.
FIG. 6 is a flow chart illustrating an example operation for determining a compliance report for a working document according to a hierarchical compliance analysis, in accordance with techniques of this disclosure.

Like reference characters denote like elements throughout the text and figures.

### DETAILED DESCRIPTION

In general, techniques are described for performing a compliance scan of electronic documents with varying granularities according to a hierarchical compliance analysis. The techniques may include a document management platform configured to determine whether a working document is compliant with respect to a reduced subset of historical documents selected from a corpus of historical documents. Some systems may simply perform character or text comparisons to determine differences between a working document and a reference, historical document; thereby posing a burden on computational resources (e.g., processing cycles, power consumption, etc.) associated with performing character or text recognition for each historical document. Such systems may not be capable of performing reliable, robust compliance analysis of working documents because comparisons of characters or text of documents does not consider contextual meaning or intent of text included in working documents and reference, historical documents.

The techniques described herein include a document management platform that performs a hierarchical compliance analysis of a working document that considers attributes, clauses, or other properties of electronic documents. At a first level of the hierarchical compliance analysis, the document management platform may analyze attributes of a working document and historical documents to reduce the amount of data (e.g., number of electronic historical documents) needed to be processed when performing a compliance analysis of the working document. The document management platform may analyze the attributes by generating and mapping attribute embeddings for a working document and historical documents to a high-dimensional vector space. The document management platform may select compliance documents from the historical documents based on the mapping of attribute embeddings. The document management platform may be robust in terms of being able to perform a compliance analysis of working documents with different attributes (e.g., working documents associated with different agreement types) by intelligently selecting a subset of historical documents as compliance documents based on attribute embeddings for working documents and historical documents. In this way, the document management platform may reduce computational resources (e.g., processing cycles, memory usage, power consumption, etc.) associated with extracting content of each historical document by reducing the number of historical documents to a subset of historical document in which content is extracted from. In other words, the document management platform may reduce computation resources, compared to other systems, by selecting a subset of historical documents - that does not include at least one historical document from a corpus of historical document - in which contextual or semantic information are extracted for a compliance analysis according to the techniques described herein.

At a second level of the hierarchical compliance analysis, the document management platform may analyze content or verbiage of text included in electronic documents. The document management platform may identify or recognize text from a working document and compliance documents. The document management platform may apply a machine learning model (e.g., a large language model) to extract and classify, based on the recognized text from the working document, clauses of the working document. The document management platform may apply the machine learning model to extract and classify, based on the recognized text from the compliance documents, clauses of the compliance documents. The document management platform may use the machine learning model to calculate content embeddings for electronic documents based on semantic information of clauses included in the electronic documents. The document management platform may use the content embeddings to identify material differences between context or verbiage included in a working document compared to selected compliance documents. For example, the document management platform may determine a cosine similarity between content embeddings for a working document and content embeddings for compliance documents to match clauses of the working document to clauses of the compliance documents. The document management platform may apply a machine learning model (e.g., a large language model) to identify and summarize material differences between clauses of the working document matched to clauses of the compliance documents. Material differences between clauses of a working document and clauses of a compliance document may include a difference between a working document clause and compliance clause that affects the rights, obligations, or overall understanding of parties involved in a transaction associated with the working document. The document management platform may facilitate compliance review of working documents, such as unexecuted contract agreements, by outputting a compliance report that captures material differences between clauses of the working document matched to clauses of the compliance documents, prior to the working document being submitted or otherwise executed. By matching clauses of a working document to clauses of compliance documents based on respective content embeddings, the document management platform may determine material differences between the working documents and the compliance documents according to linguistic concepts associated with the clauses, rather than according to phrases or specific natural language included in clauses of the working document and clauses of the compliance documents. In this way, the document management platform may match clauses of a working document to clauses of compliance documents irrespective of a locality or language the working document and the compliance documents are written in. For example, by using content embeddings to match clauses of a working document to clauses of compliance documents, the document management platform may match clauses of the working document that are written in a first language (e.g., English) to clauses of a compliance document that are written in a second language (e.g., French).

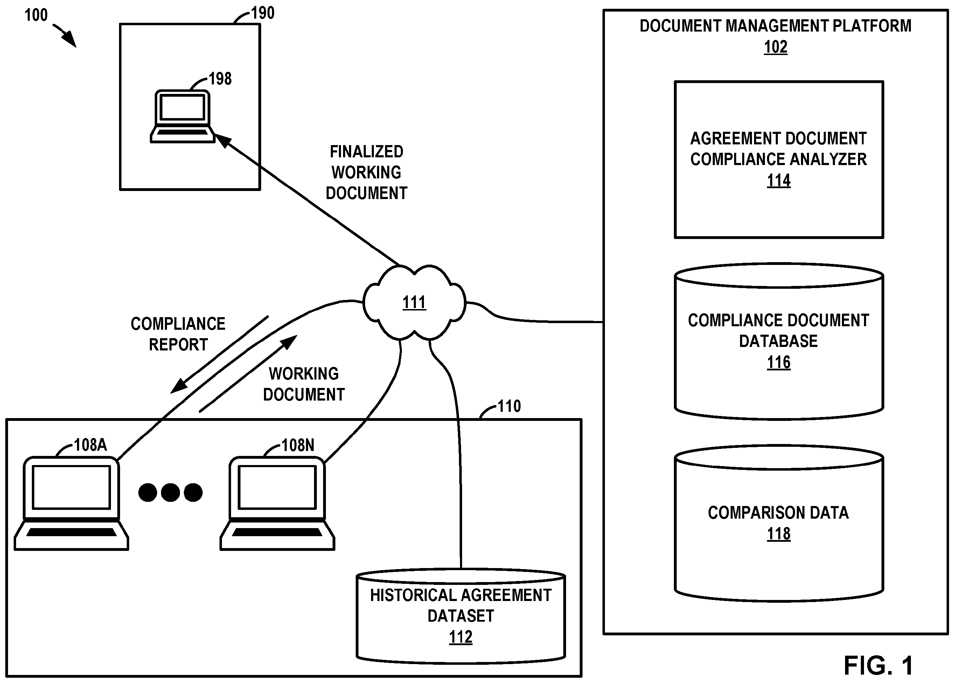

FIG. 1 is a block diagram illustrating an example computing environment for hierarchical compliance analysis of electronic working documents, in accordance with the techniques of this disclosure. In the example of FIG. 1, computing environment 100 includes document management platform 102, entity 110, network 111, and counterparty 190. Document management platform 102 may provide storage and management of documents or document packages for users associated with user devices 108. Document management platform 102 may include a collection of hardware devices, software components, and/or data stores that can be used to implement one or more applications or services provided to user devices 108 via network 111. Document management platform 102 may be configured to allow users of user devices 108 to create and send documents to one or more recipients for negotiation, collaborative editing, electronic execution (e.g., electronic signature), automation of contract fulfillment, archival, and analysis, among other tasks.

Document management platform 102 may be implemented within a centralized document system, an online document system, a document management system, or any type of digital management platform. Example environments for document management platform 102 may include, but are not limited to online signature systems, online document creation and management systems, collaborative document and workspace systems, online workflow management systems, multi-party communication and interaction platforms, social networking systems, marketplace and financial transaction management systems, or any suitable digital transaction management platform.

Document management platform 102 may be located on premises and/or in one or more data centers, with each data center a part of a public, private, or hybrid cloud. The applications or services may be distributed applications. The applications or services may support enterprise software, financial software, office or other productivity software, data analysis software, customer relationship management, web services, educational software, database software, multimedia software, information technology, healthcare software, or other types of applications or services. The applications or services may be provided as a service (-aaS) for Software-aaS, Platform-aaS, Infrastructure-aaS, Data Storage-aas (dSaaS), or other type of service.

Document management platform 102 may allow user devices 108 to access documents, via network 111 using a communication protocol, as if such document was stored locally (e.g., to a hard disk of a corresponding user devices 108). Example communication protocols for accessing documents and objects may include, but are not limited to, Server Message Block (SMB), Network File System (NFS), or AMAZON Simple Storage Service (S3).

Network 111 may include the Internet and/or may include or represent any public or private communications network or other network. For instance, network 111 may be a cellular network, Wi-Fi^{®}, ZigBee^{®}, Bluetooth^{®}, Near-Field Communication (NFC), satellite, enterprise, service provider, and/or other type of network enabling transfer of data between computing systems, servers, computing devices, and/or storage devices. One or more of such devices may transmit and receive data, commands, control signals, and/or other information across network 111 using any suitable communication techniques. Network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 111 using one or more network links. The links coupling such devices or systems to network 111 may be Ethernet, Asynchronous Transfer Mode (ATM) or other types of network connections, and such connections may be wireless and/or wired connections. One or more of the devices or systems illustrated in FIG. 1 or otherwise on network 111 may be in a remote location relative to one or more other illustrated devices or systems.

Data exchanged over network 111 may be represented using any suitable format, such as hypertext markup language (HTML), extensible markup language (XML), or JavaScript Object Notation (JSON). In some aspects and/or embodiments, network 111 may include encryption capabilities to ensure the security of documents. For example, encryption technologies may include secure sockets layers (SSL), transport layer security (TLS), virtual private networks (VPNs), and Internet Protocol security (IPsec), among others.

Entity 110 of FIG. 1 may represent computational resources owned by a corporation, a business, a government entity, a portion of a company (e.g., business unit, subsidiary, etc.), a personal user, or the like. Entity 110 may include one or more user devices 108A-108N (collectively referred to herein as "user devices 108") and historical agreement dataset 112. Examples of user devices 108 may include, but are not limited to, portable, mobile, or other devices, such as laptop computers, desktop computers, mobile phones (including smartphones), wearable computing devices (e.g., smart watches, smart glasses, etc.), tablet computers, server computers, mainframes, etc. In some examples, user devices 108 may represent a cloud computing system that provides one or more services via network 111. That is, in some examples, user devices 108 may be a distributed computing system.

Users of user devices 108 may represent an individual user, a group, an organization, a company, or a software application script that is authorized to represent entity 110 in terms of document management and document execution in transactions associated with entity 110. Users of user devices 108 may interact with document packages (or other content) generated on or managed by the document management platform 102. Each user may be associated with a username, email address, full or partial legal name, or other identifier that may be used by the document management platform 102 to identify the user and to control the ability of the user to view, modify, execute, or otherwise interact with document packages managed by the document management platform 102. In some aspects and/or embodiments, user devices 108 may sign in (e.g., based on inputs received from users of user devices 108) to user accounts associated with credentials and/or authorization that allow signed-in user devices 108 to interact with the document management platform 102. In situations in which document management platform 102 stores and uses information of a user operating user devices 108, document management platform 102 may request explicit permission from the user (e.g., by causing user device 108A to display a prompt) prior to storing and using any personally identifiable information of the users.

Historical agreement dataset 112 of entity 110 may include a database or other storage devices configured to store historical electronic documents. Historical documents may include transaction agreement contracts, company policies, employment agreements, lease agreements, or the like that have been executed and/or otherwise implemented by entity 110. For example, historical agreement dataset 112 may store previously executed agreement documents associated with a transaction between entity 110 and counterparty 190. In some instances, historical documents stored at historical agreement dataset 112 may include publicly available documents that have been retrieved or otherwise downloaded from public repositories (e.g., EDGAR). User devices 108 of entity 110 and/or document management platform 102 may store historical documents at historical agreement dataset 112 via network 111, for example. Although illustrated as stored locally at to entity 110, functionality of historical agreement dataset 112 may be stored locally at or distributed throughout document management platform 102 or an external computing system.

Counterparty 190 of FIG. 1 may represent computational resources owned by a corporation, a business, a government entity, a portion of a company (e.g., business unit, subsidiary, etc.), a personal user, or the like. Counterparty 190 may include user device 198. User device 198 may include, but is not limited to, portable, mobile, or other devices, such as laptop computers, desktop computers, mobile phones (including smartphones), wearable computing devices (e.g., smart watches, smart glasses, etc.), tablet computers, server computers, mainframes, etc. In some examples, user device 198 may represent a cloud computing system that provides one or more services via network 111. That is, in some examples, user device 198 may be a distributed computing system.

User device 198 of counterparty 190 may represent engage in one or more transactions with user devices 109 of entity 110. For example, user device 198 may engage in a pending transaction to purchase a product developed using computational resources of entity 110. As part of the pending transaction to purchase the product, user device 198 and one or more of user devices 108 may negotiate an agreement document with clauses specifying aspects of the pending transaction. User device 108A, in the example of FIG. 1, may store a working document as a draft of the negotiated agreement document. User device 108A may send, via network 111, the working document to document management platform 102 to determine whether the working document is compliant with respect to historical documents stored at historical agreement dataset 112. User device 108A may receive, via network 111, a compliance report from document management platform 102 that may outline or otherwise identify risks associated with clauses of the working document. User device 108A may update, based on the compliance report, the working document to generate a finalized working document. For instance, user device 108A may generate a finalized working document according to user inputs made to the working document to correct any identified risks indicated in the compliance report. User device 108A may send the finalized working document to user device 198 of counterparty 190. In this way, document management platform 102 may allow entity 110 may quickly and efficiently finalize draft agreement documents during pending transactions with counterparty 190.

In accordance with the techniques described herein, document management platform 102 may perform hierarchical compliance analysis to determine whether an electronic working document for entity 110 is compliant with respect to electronic historical documents stored at historical agreement dataset 112. Working documents for entity 110 may include unexecuted agreement documents between entity 110 and counterparty 190 (e.g., initial draft of an agreement, agreement under negotiation, etc.), draft policy documents for corporate policies implemented by entity 110, or the like. Document management platform 102 may receive, via network 111, a request to perform a compliance analysis of a working document. For example, document management platform 102 may receive a request from user device 108A to perform a compliance analysis of a working document (e.g., a contract) that a user operating user device 108A is drafting, negotiating, or the otherwise working on. Document management platform 102 may analyze the working document to determine compliance of the working document with respect to selected historical documents of historical agreement dataset 112.

At a first level of a hierarchical compliance analysis of a working document, document management platform 102 may select a subset of historical documents stored at historical agreement dataset 112 as compliance documents. Document management platform 102 may select the subset of historical documents as compliance documents based on attributes of a working document and attributes of historical documents stored at historical agreement dataset 112. For instance, document management platform 102 may determine a working attribute embedding that characterizes attributes for a working document, such as, for example, one or more of an agreement type identifier associated with the working document, a price term (also referred to herein as "deal size") identifier associated with the working document, a counterparty identifier associated with the working document, a product quantity associated with the working document, a geographical region identifier associated with the working document, or the like. Document management platform 102 may determine a compliance attribute embedding for each historical document of historical agreement dataset 112 that characterizes attributes for respective historical documents such as an agreement type identifier associated with the one or more corresponding historical documents, a deal size identifier associated with the one or more corresponding historical documents, a counterparty identifier associated with the one or more corresponding historical documents, a product quantity associated with the one or more corresponding historical documents, a geographical region identifier associated with the one or more corresponding historical documents, or the like. Document management platform 102 may determine a compliance attribute embedding for each historical document stored at historical agreement dataset 112 to generate a plurality of compliance attribute embeddings.

Document management platform 102 may select a subset of historical documents from historical agreement dataset 112 as compliance documents according to a comparison of a working attribute embedding for a working document and a plurality of compliance attribute embedding for historical documents of historical agreement dataset 112. Document management platform 102 may select the subset of historical documents as compliance documents that are used as references of compliance with respect to the hierarchical compliance analysis of the working document. In this way, document management platform 102 may identify and use a subset of historical documents associated with attributes of a working document as references for a compliance analysis of the working document, thereby reducing computational resources (e.g., processing power) for conducting compliance analysis of working documents. By document management platform 102 selecting compliance documents during a compliance analysis, document management platform 102 may perform compliance analysis of working documents with a reduced set of historical documents, thereby reducing computational resources (e.g., memory storage) for performing compliance analysis of working documents. Document management platform 102 may additionally or alternatively perform a compliance analysis of a working document generated using a template (e.g., a template for a master service agreement, a lease agreement, etc.) to reduce computational resources (e.g., processing cycles, memory usage, power consumption, etc.) associated with generating attribute embeddings for historical documents and selecting the compliance documents. For example, document management platform 102 may determine attributes of a working document based on a template used to generate the working document, which reduces computational resources associated with identifying attributes from text of the working document.

At a second level of a hierarchical compliance analysis of a working document, document management platform 102 may determine and output a compliance report for the working document based on identified working document clauses of the working document and identified compliance clauses of the selected compliance documents. For instance, document management platform 102 may identify working document clauses of the working document and compliance clauses of the selected compliance documents. Document management platform 102 may identify working document clauses and compliance clauses that correspond to sections included in agreement documents, requirements included in agreement documents, passages included in agreement documents, articles included in agreement documents, stipulations included in agreement documents, provisions included in agreement documents, obligations included in agreement documents, consideration included in agreement documents, term or termination of agreement documents, amendments of agreement documents, notices of agreement documents, schedules of agreement documents, and/or appendices of agreement documents.

Document management platform 102 may determine a compliance score based on comparisons of the identified working document clauses of the working document to the identified compliance clauses of the selected compliance documents. For instance, document management platform 102 may determine a compliance score as a similarity score computed with respect to the identified working document clauses of the working document to the identified compliance clauses of the selected compliance documents. Document management platform 102 may determine, based on the compliance score for the working document, a compliance report as an indication of whether the working document is compliant with respect to the selected compliance documents. For instance, based on document management platform 102 determining the compliance score for the working document satisfies a threshold, document management platform 102 may determine a compliance report that includes an indication that the working document is compliant. Based on document management platform 102 determining the compliance score for the working document does not satisfy the threshold, document management platform 102 may determine a compliance report that includes an indication that the working document is not compliant. In this way, document management platform 102 may perform an initial compliance analysis to determine whether a working document is substantially different than selected compliance documents (e.g., a working document does not include a clause included in identified compliance clauses, a working document includes an additional clause not included in identified compliance clauses, etc.).

In some examples, document management platform 102 may determine whether finer-grained analysis of a working document is needed based on a compliance score for the working document. For example, document management platform may determine a finer-grained analysis of comparing content of working document clauses to content of compliance document clauses may be needed based on whether the compliance score satisfies a compliance score threshold. Based on the compliance score for the working document satisfying the compliance score threshold, document management platform 102 may bypass performing additional analysis of clause content comparisons as a result of document management platform 102 determining the compliance level of the working document is satisfactory compared to selected compliance documents. In this way, document management platform 102 may save computational resources (e.g., processing cycles, memory usage, power consumption, etc.) when performing a compliance analysis of a working document.

At a third level of a hierarchical compliance analysis of a working document, document management platform 102 may generate comparison data used to generate a more comprehensive compliance report for the working document. Document management platform 102 may generate comparison data based on identified working document clauses of a working document and identified compliance clauses of selected compliance documents. For instance, document management platform 102 may generate comparison data to include a summary indicating one or more similarities between the working document and the selected compliance documents and/or one or more differences between the working document and the selected compliance documents. Document management platform 102 may determine a compliance report based on the comparison data. For instance, document management platform 102 may determine a compliance report that identifies material differences between the working document and the selected compliance documents that are summarized in the comparison data. In this way, document management platform 102 may perform a comprehensive compliance analysis of a working document based on clause-level comparisons of working document clauses to compliance clauses. Document management platform 102 may include additional, finer-grained analysis of content of a working document in determinations of compliance reports in subsequent levels of the hierarchical compliance analysis.

In operation, document management platform 102, or more specifically agreement document compliance analyzer 114, may determine a compliance attribute embedding for each historical document stored at historical agreement dataset 112 to generate a plurality of compliance attribute embeddings. Agreement document compliance analyzer 114 may include a software module with computer-readable instructions for performing a hierarchical compliance analysis of an electronic working document, in accordance with the techniques described herein. Agreement document compliance analyzer 114 may determine a compliance attribute for a respective historical document that characterizes attributes for the historical document. Agreement document compliance analyzer 114 may determine attributes for a historical document by, for example, extracting the attributes front metadata or content of the historical document. For instance, agreement document compliance analyzer 114 may identify fields of a historical document using automated extraction techniques, such as techniques for identifying regular expression patterns from the compliance document, natural language processing techniques (e.g., named entity recognition, part-of-speech tagging, dependency parsing, etc.), machine learning models (e.g., large language models), rule-based systems, template matching, optical character recognition (OCR) techniques, keyword search techniques, latent semantic analysis, topic modeling, or the like. Agreement document compliance analyzer 114 may extract field values from identified fields of the historical document. Agreement document compliance analyzer 114 may assign, to an extracted field value, a label identifying an attribute corresponding to the extracted field. In some examples, agreement document compliance analyzer 114 may determine attributes of a historical document based on user inputs received from users of any of user devices 108 and/or from an administrator of document management platform 102.

Agreement document compliance analyzer 114 may generate a compliance attribute embedding for a historical document based on determined attributes for the historical document. For instance, agreement document compliance analyzer 114 may input the determined attributes for a historical document into a machine learning model (e.g., a large language model) to output a compliance attribute embedding for the working document that characterizes or captures the attributes for the historical documents in a high-dimensional vector. Agreement document compliance analyzer 114 may store each compliance attribute embedding with corresponding historical documents at historical agreement dataset 112. In some instances, agreement document compliance analyzer 114 may store each compliance attribute embedding with a label identifying one or more corresponding historical document at compliance document database 116.

Agreement document compliance analyzer 114 may receive a request from user devices 108 to determine whether working documents are compliant with respect to historical documents of historical agreement dataset 112. In the example of FIG. 1, agreement document compliance analyzer 114 may receive, via network 111, a working document from user device 108A with a request to perform a compliance analysis of the working document. Agreement document compliance analyzer 114 may determine a working attribute embedding for the working document that characterizes attributes of the working document as a high-dimensional vector. Agreement document compliance analyzer 114 may determine attributes of the working document by, for example, using automated extraction techniques, such as techniques for identifying regular expression patterns from the compliance document, natural language processing techniques (e.g., named entity recognition, part-of-speech tagging, dependency parsing, etc.), machine learning models (e.g., large language models), rule-based systems, template matching, optical character recognition (OCR) techniques, keyword search techniques, latent semantic analysis, topic modeling, or the like. For instance, agreement document compliance analyzer 114 may extract field values from fields of the working document as attribute for the working document. Attributes of a working document may represent attributes, properties, characteristics, or the like associated with content of the working document. For example, attributes of a working document may include values corresponding to an agreement type identifier (e.g., identifiers for master service agreements, lease agreements, employment agreements, etc.), values corresponding to a deal size identifier (e.g., a dollar value estimating the size of an agreement deal such as $10,000, an identifier indicating a scale of an agreement deal such as large, medium, small, a total value of an agreement, monthly payments of an agreement, price of a product of an agreement, etc.), a counterparty identifier (e.g., an identifier for one or more parties associated with an agreement for entity 110), a product identifier (e.g., an identifier indicating one or more products involved in an agreement), a product quantity identifier (e.g., an identifier indicating a quantity of products involved in an agreement), a geographical region identifier, or the like. Agreement document compliance analyzer 114 may determine attributes for the working document that correspond to determined attributes for each of the historical documents of historical agreement dataset 112.

In some examples, document management platform 102 may generate a working document according to a template. For example, document management platform 102 may generate a working document based on a request received from user device 108A to generate the working document according to a template. Document management platform 102 may use a template that defines one or more attributes of a working document. For example, document management platform 102 may use a template that defines an agreement type attribute of lease agreement to generate a working document for a draft lease agreement. Document management platform 102 may provide the working document generated with the template to agreement document compliance analyzer 114. Agreement document compliance analyzer 114, may identify, based on the working document, field values of the working document associated with one ore additional attributes. For example, agreement document compliance analyzer 114 may identify (e.g., via natural language processing techniques) a field value of the working document associated with a monthly rent price as a second attribute of the working document associated with a deal size attribute. Agreement document compliance analyzer 114 may determine, based at least on the identified field values and the template, attributes for the working document. For example, agreement document compliance analyzer 114 may determine a first attribute for the working document to be an agreement type attribute of a lease agreement, as defined in the template, and a second attribute for the working document to be a deal size attribute of a monthly rent price, as indicated in the identified field value.

At the first level of a hierarchical compliance analysis of a working document, agreement document compliance analyzer 114 may generate working attribute embeddings for a working document based on determined attributes for the working document. For example, agreement document compliance analyzer 114 may input determined attribute for the working document into a machine learning model (e.g., a large language model). Agreement document compliance analyzer 114 may apply the machine learning model to output a working attribute embedding that characterize or capture the determined attributes of the working document as a high-dimensional vector.

Agreement document compliance analyzer 114 may select one or more compliance documents from historical documents stored at historical agreement dataset 112. Agreement document compliance analyzer 114 may select one or more compliance documents from historical documents based on each compliance attribute embedding associated with historical document of historical agreement dataset 112 and a working attribute embedding associated with a working document. For instance, agreement document compliance analyzer 114 may group historical documents of historical agreement dataset 112 into compliance document groups according to compliance attribute embeddings determined for the historical documents. Agreement document compliance analyzer 114 may generate a compliance document group to include an indication to one or more respective historical documents associated with compliance attribute embeddings used to determine the compliance document group. Agreement document compliance analyzer 114 may generate a group attribute embedding for each compliance document group that characterizes or captures compliance attribute embeddings for each historical document included in a compliance document group. Agreement document compliance analyzer 114 may map, based on values of the working attribute embedding, a working attribute embedding to a compliance document group. For example, agreement document compliance analyzer 114 may map a working attribute embedding to a compliance document group by comparing values of the working attribute embedding (e.g., values of a high-dimensional vector representing working document attributes) to values of each group attribute embedding for the compliance document groups (e.g., values of a high-dimensional vector representing attributes associated with a compliance document group and/or attributes associated with one or more compliance documents). Agreement document compliance analyzer 114 may determine a subset of historical documents based on indications to the subset of historical documents included in the compliance document group the working document was mapped to. Agreement document compliance analyzer 114 may select the subset of historical documents as the compliance documents. Agreement document compliance analyzer 114 may store selected compliance documents at compliance document database 116. In some instances, agreement document compliance analyzer 114 may store, at compliance document database 116, the selected compliance documents with corresponding compliance attribute embeddings. Compliance document database 116 may include a database or other storage devices configured to store selected compliance documents and corresponding attribute embeddings. For example, compliance document database 116 may include a relational database configured to store selected compliance documents and corresponding attribute embeddings as records with keys that allow agreement document compliance analyzer 114 to query the compliance documents and/or attribute embeddings.

After selecting the compliance documents, agreement document compliance analyzer 114 may proceed to a second level of a compliance analysis of a working document. Agreement document compliance analyzer 114 may identify working document clauses of the working document and compliance clauses of the selected compliance documents. Working document clauses of working documents and compliance clauses of compliance documents may correspond to provisions of agreement documents, definitions of agreement documents, scope of agreement documents, obligations included in agreement documents, consideration included in agreement documents, term or termination of agreement documents, amendments of agreement documents, notices of agreement documents, schedules of agreement documents, and appendices of agreement documents. Agreement document compliance analyzer 114 may identify working document clauses and compliance clauses by applying a machine learning model (e.g., a large language model) to determine document objects for the working document and selected compliance documents. For example, agreement document compliance analyzer 114 may use the machine learning model to chunk content (e.g., text) of a working document into chunks (e.g., words, sentences, paragraphs, etc.) that represent distinct portions of content (e.g., portions of a clause, portions of a definition, etc.) of the working document. Agreement document compliance analyzer 114 may determine a document object (e.g., a clause, a definition, etc.) for the working document as a collection of the chunked content of the working document. Agreement document compliance analyzer 114 may identify working document clauses of the working document based on the determined document objects for the working document. For instance, agreement document compliance analyzer 114 may identify a working document clause of "warranties" as one or more document objects corresponding to chunks of content associated with warranties. Agreement document compliance analyzer 114 may similarly determine compliance clauses for each selected compliance document.

Agreement document compliance analyzer 114 may determine a compliance report. Agreement document compliance analyzer 114 may determine a compliance report based on working document clauses of a working document and compliance clauses of selected compliance documents. For instance, agreement document compliance analyzer 114 may determine a compliance report for a working document by comparing working document clauses to compliance clauses. Agreement document compliance analyzer 114 may compare working document clauses to compliance clauses by determining a working content embedding for the working document and compliant content embeddings for each selected compliance document.

Agreement document compliance analyzer 114 may determine a working content embedding for a working document. Agreement document compliance analyzer 114 may determine a working content embedding for a working document based identified working document clauses of the working document. For example, agreement document compliance analyzer 114 may apply a machine learning model (e.g., a large language model) to generate a working content embedding that characterizes or captures identified working document clauses as a high-dimensional vector. In some examples, agreement document compliance analyzer 114 may concatenate or otherwise combine a working content embedding for a working document with a corresponding working attribute embedding for the working document to generate a working document embedding for the working document. Agreement document compliance analyzer 114 may use a working content embedding or a working document embedding when comparing identified working document clauses to identified compliance clauses.

Agreement document compliance analyzer 114 may determine a compliance content embedding for each selected compliance document. Agreement document compliance analyzer 114 may determine a compliance content embedding for a compliance document based on identified compliance clauses of the compliance document. For instance, agreement document compliance analyzer 114 may apply a machine learning model (e.g., a large language model) to generate a compliance content embedding that characterizes or captures identified compliance clauses of a compliance document as a high-dimensional vector. In some examples, agreement document compliance analyzer 114 may concatenate or otherwise combine a compliance content embedding for a compliance document and a compliance attribute embedding for the compliance document to generate a compliance document embedding for the compliance document. Agreement document compliance analyzer 114 may use compliance content embeddings for compliance documents or compliance document embeddings for the compliance documents when comparing identified working document clauses to identified compliance clauses.

Agreement document compliance analyzer 114 may determine a compliance score for a working document. Agreement document compliance analyzer 114 may determine a compliance score for a working document based on a working document embedding for the working document and a compliance document embedding for the compliance document. For instance, agreement document compliance analyzer 114 may determine a compliance score for a working document by applying cosine similarity, dot product, Euclidean distance, Manhattan distance, Jaccard similarity, or other algorithms for computing a similarity score or ranking with respect to a working document embedding for the working document and each compliance embedding for selected compliance documents.

Agreement document compliance analyzer 114 may determine a compliance report for a working document based on a compliance score for the working document. Agreement document compliance analyzer 114 may generate, based on a compliance score for a working document, a compliance report to include an indication of whether a working document is compliant. Agreement document compliance analyzer 114 may determine whether a working document is compliant based on whether a compliance score for the working document satisfies a threshold. For instance, based on a compliance score for a working document satisfying a threshold, agreement document compliance analyzer 114 may generate a compliance report to include an indication that the working document is compliant. Based on a compliance score for a working document not satisfying the threshold, agreement document compliance analyzer 114 may generate a compliance report to include an indication that the working document is not compliant.

Agreement document compliance analyzer 114 may output an indication of a compliance report for a working document. For example, in response to receiving a request to perform a compliance analysis of a working document from user device 108A, agreement document compliance analyzer 114 may output, via network 111, a compliance report determined for the working document according to the techniques described herein. Agreement document compliance analyzer 114 may output the compliance report as data for a graphical user interface that may include an indication of whether a working document is compliant. User device 108A may display the compliance report according to the data for the graphical user interface.

In some examples, agreement document compliance analyzer 114 may determine a compliance report based on comparison data stored at comparison data 118. Agreement document compliance analyzer 114 may generate comparison data for a working document that includes a summary indicating one or more similarities between the working document and selected compliance documents and/or one or more differences between the working document and the selected compliance documents. For example, agreement document compliance analyzer 114 may apply a machine learning model (e.g., a large language model) to generate a summary of material differences between identified working document clauses and identified compliance clauses. Agreement document compliance analyzer 114 may store generated comparison data at comparison data 118. Comparison data 118 may include a database or other storage devices configured to store comparison data of working documents that includes arrays, lists, or other data structures representing relationships between identified working document clauses, identified compliance clauses, and summaries indicating similarities and/or differences between identified working document clauses and identified compliance clauses. Agreement document compliance analyzer 114 may determine the compliance report to further include one or more summaries included in comparison data for a working document stored at comparison data 118. Agreement document compliance analyzer 114 may output the compliance report as data for a graphical user interface that displays the one or more summaries included in comparison data for the working document.

In the example of FIG. 1, user device 108A may receive a compliance report for a working document. A user operating user device 108A may modify the working document based on the compliance report. For example, a user operating user device 108A may add, remove, or otherwise change language in the working document according to a summary of differences between the working document and compliance documents that is included in the compliance report. After legal review, user device 108A may submit the working document as a finalized working document. In some examples, user device 108A may upload the finalized working document to document management platform 102, via network 111. Document management platform 102 may send the finalized working document to user device 198 of counterparty 190 via network 111, for example. In some instances, user device 108A may send the finalized working document to user device 198 via network 111.

The techniques described herein may provide one or more technical advantages that realize one or more practical applications. For example, document management platform 102 may perform compliance analysis of working documents for entity 110 without playbooks for entity 110. Playbooks for entity 110 are generally manually created as a rulebook or guidelines for various documents (e.g., agreement documents, policy documents, etc.) associated with entity 110. Entity 110 may expend significant human resources (e.g., personnel) and computational resources (e.g., memory, processing power, etc.) when generating playbooks. By automatically determining and selecting compliance documents used during compliance analysis, document management platform 102 may reduce the number or volume of historical documents needed to be analyzed during compliance analysis. Document management platform 102 may quickly and efficiently perform compliance analysis of a working document with respect to a selected set of compliance documents to avoid manual prompting or rule writing associated with making a playbook. Document management platform 102 may output compliance reports for a working document to reduce manual review of working documents or the need for legal professional review (e.g., if a working document is compliant). In this way, document management platform 102 may reduce the human resources and computational resources entity 110 may use in generating a playbook. By selecting a subset of historical documents as compliance documents, document management platform 102 may be robust in terms of performing a consistent compliance analysis given different attributes of input, working documents. In other words, rather than generating multiple playbooks with rules directed to working documents with various attributes, document management platform 102 may perform a compliance analysis for any variety of attributes of a working document by selecting historical documents as compliance documents.

Document management platform 102 may quickly and efficiently analyze compliance risk of working documents according to a hierarchical analysis framework. Some systems may run automated compliance checks of documents by visualizing text of the documents in a three-dimensional space, without considering hierarchical information (e.g., attribute information, clause information, semantic information, etc.) of the documents. These systems may be generic and tend to determine compliance of documents that have already been executed, not documents prior to execution (e.g., documents under negotiation). Document management platform 102, in accordance with the techniques described herein, may determine a compliance score for a working document with respect to one or more selected compliance documents.

Selecting the one or more compliance documents is a first level of the hierarchical analysis framework related to identifying compliance documents based on comparisons of attribute values of the working document to attribute values of the compliance documents. Determining a compliance score for a working document is a second level of the hierarchical analysis framework related to a cursory determination of whether a working document is compliant with respect to a threshold. Document management platform 102 may apply additional or alternative levels of hierarchical analysis related to identifying and/or comparing various aspects of the working document and compliance documents. For example, document management platform 102 may generate comparison data for a working document that includes summaries of a more fine-grained comparison of contextual intents of working document clauses to contextual intents of compliance clauses. In this way, document management platform 102 may determine whether a working document is in compliance according to a broad analysis of attributes or semantic features of the working document and/or fine-grained analysis of other aspects of the working document. By comparing semantic information of working documents to semantic information of compliance documents, document management platform 102 may determine issues of non-compliance based on linguistic concepts of documents, rather than on phrases of specific natural language of documents. That is, document management platform 102 may determine compliance of a working document that may be in a different language than compliance documents. Document management platform 102 may efficiently compare semantic information of working document to semantic information of compliance documents in a way that reduces computational resources (e.g., memory usage) by determining content embeddings that capture smaller portions of data of the respective documents. For example, document management platform 102 may determine content embeddings that do not include data associated with a header or page number, but rather includes data representing content of respective documents as a high-dimensional array of values. In other words, document management platform 102 may determine a content embedding for a document as a high-dimensional array of values that is a smaller size than text data of the document.

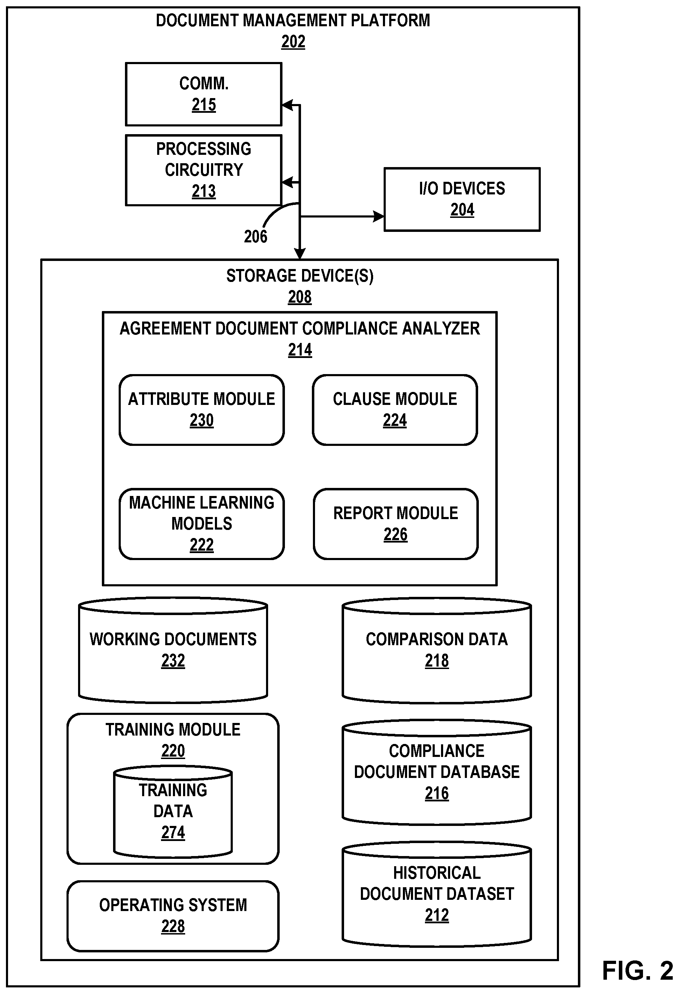

FIG. 2 is a block diagram illustrating an example document management platform for hierarchical compliance analysis of electronic working documents, in accordance with techniques of this disclosure. Document management platform 202, agreement document compliance analyzer 214, historical document dataset 212, and comparison data 218 of FIG. 2 may be example or alternative implementations of document management platform 102, agreement document compliance analyzer 114, historical document dataset 112, and comparison data 118 of FIG. 1, respectively. FIG. 2 illustrates only one particular example of document management platform 202, and many other examples of document management platforms may be used in other instances and may include a subset of components included in example document management platform 202 or may include additional components not shown in FIG. 2. For example, functionality of processing circuitry 213, communication units 215, I/O devices 204, and/or storage devices 208 may be distributed across multiple computing devices within a cloud-based environment provided by document management platform 202.

In the example of FIG. 2, document management platform 202 includes communication units 215, processing circuitry 213, input/output (I/O) devices 204, one or more storage devices 208, and communication channels 206. Communication channels 206 may interconnect each of the components 215, 213, 204, and 208 for inter-component communications (physically, communicatively, and/or operatively). In some examples, communication channel 206 may include a system bus, a network connection, an interprocess communication data structure, or any other method for communicating data.

Communication units 215 of document management platform 202 may communicate with one or more external devices via one or more wired and/or wireless networks by transmitting and/or receiving network signals on the one or more networks. Examples of communication units 215 include a network interface card (e.g., such as an Ethernet card), an optical transceiver, a radio frequency transceiver, a GNSS receiver, or any other type of device that can send and/or receive information. Other examples of communication units 215 may include short wave radios, cellular data radios (for terrestrial and/or satellite cellular networks), wireless network radios, as well as universal serial bus (USB) controllers.

One or more input devices of I/O devices 204 may represent any input devices of document management platform 202 not otherwise separately described herein. Input devices of I/O devices 204 may generate, receive, and/or process input. For example, one or more input devices of I/O devices 204 may generate or receive input from a network, a user input device, or any other type of device for detecting input from a human or machine.

One or more output devices of I/O devices 204 may represent any output devices of document management platform 202 not otherwise separately described herein. Output devices of I/O devices 204 may generate, present, and/or process output. For example, one or more output devices of I/O devices 204 may generate, present, and/or process output in any form. Output devices of I/O devices 204 may include one or more universal serial bus (USB) interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

Processing circuitry 213 may include one or more processors for implementing functionality and/or execute instructions within document management platform 202. For example, processing circuitry 213 may receive and execute instructions that provide the functionality of agreement document compliance analyzer 214, working documents 232, historical document dataset 212, compliance document database 216, comparison data 218, operating system 228 and/or training module 220. These instructions executed by processing circuitry 213 may cause document management platform 202 to store and/or modify information within storage devices 208 or processing circuitry 213 during program execution. Processing circuitry 213 may execute instructions of agreement document compliance analyzer 214, working documents 232, historical document dataset 212, compliance document database 216, comparison data 218, operating system 228 and/or training module 220 to perform one or more operations. That is agreement document compliance analyzer 214, working documents 232, historical document dataset 212, compliance document database 216, comparison data 218, operating system 228 and/or training module 220 may be operable by processing circuitry 213 to perform various functions described herein. **In** some instances, processing circuitry 213 may include one or more processors associated with cloud computing processing components (e.g., distributed processors across a cloud computing platform).

**In** the example of FIG. 2, storage devices 208 may include agreement document compliance analyzer 214, working documents 232, historical document dataset 212, compliance document database 216, comparison data 218, operating system 228 and training module 220. Storage devices 208 within document management platform 202 may store information for processing during operation of document management platform 202 (e.g., document management platform 202 may store data accessed by agreement document compliance analyzer 214, working documents 232, historical document dataset 212, compliance document database 216, comparison data 218, operating system 228 and/or training module 220). In some examples, storage devices 208 may be a temporary memory, meaning that a primary purpose of storage devices 208 is not long-term storage. Storage devices 208 on document management platform 202 may be configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art.

Storage devices 208 may include one or more computer-readable storage media. Storage devices 208 may be configured to store larger amounts of information than volatile memory. Storage devices 208 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 208 may store program instructions and/or information associated with agreement document compliance analyzer 214, working documents 232, historical document dataset 212, compliance document database 216, comparison data 218, operating system 228 and/or training module 220. In some instances, storage devices 108 may include cloud storage components (e.g., distributed storage devices across a cloud computing environment).

Storage devices 208 may store agreement document compliance analyzer 214, working documents 232, historical document dataset 212, compliance document database 216, comparison data 218, operating system ("OS") 228 and/or training module 220. OS 228 may control the operation of components of document management platform 202. For example, OS 228 may facilitate the communication of agreement document compliance analyzer 214, working documents 232, historical document dataset 212, compliance document database 216, comparison data 218, operating system 228 and/or training module 220 with processing circuitry 213, storage devices 208, communication units 215, and I/O devices 204. In some examples, OS 228 may manage interactions between software modules (e.g., agreement document compliance analyzer 214) and a user operating document management platform 202. OS 228 may have a kernel that facilitates interactions with underlying hardware of document management platform 202 and provides a fully formed application space capable of executing a wide variety of software modules having secure partitions in which each of the software modules executes to perform various operations.

Working documents 232 may include a database or other storage devices configured to store electronic documents for an entity (e.g., entity 110 of FIG. 1). For example, document management platform 202 may receive, via communication units 215, working documents from one or more user devices (e.g., user devices 108) of an entity with a request to perform a compliance analysis of the working documents. Document management platform 202 may store received electronic working documents at working documents 232.

Agreement document compliance analyzer 214, in the example of FIG. 2, includes attribute module 230, clause module 224, report module 226, and one or more machine learning models 222. Attribute module 230 may include a software module with computer-readable instructions for selecting compliance documents from historical document stored at historical document dataset 212, in accordance with the techniques described herein. Clause module 224 may include a software module with computer-readable instructions for identifying clauses from electronic documents, in accordance with the techniques described herein. Report module 226 may include a software module with computer-readable instructions for determining a compliance report for a working document stored at working documents 232, in accordance with the techniques described herein. Machine learning models 222 may include one or more software modules with computer-readable instructions for using machine learning models, such as neural networks, autoencoders, or other machine learning techniques, to perform one or more operations as described herein.

Training module 220 may train machine learning models of machine learning models 222 based on sample documents of training data 274 that are labeled according to an operation that a machine learning model of machine learning models 222 have been trained to perform. Training module 220 may include a software module with computer-readable instructions for training machine learning models 222 to perform various operations as described herein. Training data 274 of training module 220 may include a database or other storage devices configured to store training data used by training module 220 to train machine learning models 222. For example, training data 274 may include a database that stores sample electronic documents with various labels that have been applied to train machine learning models 222 to output various data structures, such as attribute embeddings, content embeddings, and/or comparison data. Although illustrated as stored locally at document management platform 202, training module 220 may be stored locally at an external computing system of computing device. That is, in some instances, training module 220 may perform functionality of training machine learning models 222 at a computing system or computing device external to document management platform 202 and send pre-trained machine learning models 222 to document management platform 202.

**In** accordance with the techniques described herein, attribute module 230 of agreement document compliance analyzer 214 may determine compliance attribute embeddings for each historical document stored at historical document dataset 212. For example, attribute module 230 may generate a compliance attribute embedding for a historical document by applying a first machine learning model of machine learning models 222 that is trained to extract attributes of the historical document and embed the attributes as the compliance attribute embedding. Attribute module 230 may determine a compliance attribute embedding for a historical document includes a high-dimensional vector that characterizes or captures attributes or properties of the historical document, such as agreement type, deal size, counterparty, product information, geographical region, or the like.

Attribute module 230 may determine a working attribute embedding for a working document stored at working documents 232. For example, attribute module 230 may generate a working attribute embedding for a working document by applying a first machine learning model of machine learning models 222 that is trained to extract attributes of the working document and embed the attributes as the working attribute embedding. Attribute module 230 may determine a working attribute embedding for a working document includes a high-dimensional vector that characterizes or captures attributes or properties of the working document, such as agreement type, deal size, counterparty, product information, geographical region, or the like. Attribute module 230 may store the working attribute embedding with the working document at working documents 232.

Training module 220 may train the first machine learning model of machine learning models 222 to generate compliance attribute embeddings and working attribute embeddings based on training data 274. For example, training module 220 may use sample documents labeled with attributes of training data 274 to train the first machine learning model of machine learning models 222 to generate attribute embeddings for electronic documents. In some examples, training module 220 may train the first machine learning model to generate attribute embeddings based on biases or weights applied to extracted attributes from electronic documents. In this way, attribute module 230 may apply the first machine learning model to generate attribute embeddings that favor or emphasize attributes of an electronic document in the attribute embeddings.

Attribute module 230 may select compliance documents from historical document dataset 212. For example, attribute module 230 may select compliance documents from historical document dataset 212 based on a mapping of a working attribute embedding for a working document and a plurality of compliance attribute embeddings for historical documents to a high dimensional embedding space (e.g., an embedding space with dimensions that correspond to determined attributes of electronic documents). Attribute module 230 may select compliance document from historical document dataset 212 by comparing values of a working attribute embedding for a working document to values of each compliance attribute embedding for historical document to find the top-N historical documents that are most similar to the working document. For instance, attribute module 230 may use the working attribute embedding as a reference embedding and apply embedding comparison techniques (e.g., vector cosine similarity, Top-K Nearest Neighbors, etc.) with respect to each compliance attribute embedding for historical documents to select the compliance documents from the historical documents. Attribute module 230 may store the selected compliance documents at compliance document database 216. Attribute module 230 may store the selected compliance documents at compliance document database 216 with a corresponding compliance attribute embedding and an indication of the working document.

In some examples, attribute module 230 may select compliance documents based on weighted attributes represented in attribute embeddings generated using the first machine learning model of machine learning models 222. Attribute module 230 may assign a weight or bias value (e.g., a value between 0 and 1) to attributes extracted from electronic documents using the first machine learning model. For example, attribute module 230 may assign a weight value of 1 to an attribute corresponding to an agreement type and assign a weight value of 0.3 to an attribute corresponding to a deal size. The first machine learning model of machine learning models 222 may generate attribute embeddings that reflect the weighted values assigned to each extracted attribute. In this way, attribute module 230 may select compliance documents by focusing on agreement type attributes rather than deal size attributes, for example.

In some instances, attribute module 230 may not select any compliance documents for a working document. Attribute module 230 may send, to report module 226, an indication that no compliance document have been identified. Report module 226 may generate and output data for a graphical user interface with an indication that no compliance documents have been identified. Report module 226 may generate the data for the graphical user interface that includes a prompt for a user operating a user device (e.g., any of user devices 108 of FIG. 1) to manually identify compliance documents to be used for compliance analysis of a working document received from the user device.

Clause module 224 of agreement document compliance analyzer 214 may identify working document clauses of a working document stored at working documents 232. Clause module 224 may apply a second machine learning model of machine learning models 222 to chunk distinct portions of content (e.g., text) of a working document into document objects. Distinct portions of the working document may include portions of clauses, definitions, or other content of the working document with a coherent context. A document object may be a data structure that includes a chunk of the distinct portions of the working document over a context window (e.g., a span of text around a word, sentence, or paragraph that is considered when chunking distinct portions of the working document into document objects). Clause module 224 may apply the second machine learning model of machine learning models 222 to identify, based on the document objects for the working document, working document clauses of the working document. For instance, clause module 224 may determine a working document clause for the working document as one or more document objects that correspond to a single clause, definition, or other semantic element of the working document.

Clause module 224 may determine a working content embedding for the working document. Clause module 224 may determine the working content embedding by applying the second machine learning model of machine learning models 222. For example, clause module 224 may instruct the second machine learning model of machine learning models 222 to encode identified working document clauses of a working document as a working content embedding that characterizes content, verbiage, or other semantic information of identified working document clauses. In some examples, clause module 224 may concatenate or otherwise combine a working attribute embedding for a working document with a working content embedding for the working document to generate a working document embedding.

Clause module 224 may identify compliance clauses for selected compliance documents stored at compliance document database 216. Clause module 224 may apply a second machine learning model of machine learning models 222 to chunk distinct portions of content (e.g., text) of a selected compliance document into document objects. Distinct portions of the compliance document may include portions of clauses, definitions, or other content of the compliance document with a coherent context. A document object may be a data structure that includes a chunk of the distinct portions of the compliance document over a context window. Clause module 224 may apply the second machine learning model of machine learning models 222 to identify, based on the document objects for the compliance document, compliance clauses of the compliance document. For instance, clause module 224 may apply the second machine learning model of machine learning models 222 to determine a compliance clause for the compliance document as one or more document objects that correspond to a single clause, definition, or other semantic element of the compliance document.

Clause module 224 may determine a compliance content embedding for the compliance document. Clause module 224 may determine the compliance content embedding by applying the second machine learning model of machine learning models 222. For example, clause module 224 may instruct the second machine learning model of machine learning models 222 to encode identified compliance clauses of selected compliance documents as a compliance content embedding that characterizes content, verbiage, or other semantic information of identified working document clauses. In some instances, clause module 224 may instruct the second machine learning model of machine learning models 222 to encode identified compliance clauses for each selected compliance document as separate compliance content embeddings. In some examples, clause module 224 may instruct the second machine learning model of machine learning models 222 to combine each compliance content embedding with corresponding compliance attribute embeddings to generate compliance document embeddings.

Training module 220 may train the second machine learning model of machine learning models 222 to generate content embeddings based on training data 274. For example, training module 220 may apply sample electronic documents labeled with semantic information (e.g., a sample agreement document with labels of clauses included in the sample agreement document) to train the second machine learning model to generate content embeddings that characterize or capture semantic information of electronic documents as a high-dimensional vector.

Clause module 224 may determine a compliance score for the working document based on identified working document clauses of the working document and identified compliance clauses of the selected compliance documents. For example, clause module 224 may determine a compliance score based on a working document embedding that characterizes attributes and content of a working document and one or more compliance document embeddings that characterize attributes and content of selected compliance documents. Clause module 224 may map the working document embedding and each compliance document embedding to a high-dimensional vector space. For example, clause module 224 may match, in a high-dimensional vector space, working document clauses to compliance clauses by measuring a cosine similarity between values of a working document embedding to values of compliance document embeddings. Clause module 224 may determine a compliance score for the working document by comparing the working document embedding to each compliance document embedding. For example, clause module 224 may determine the compliance score for the working document by calculating a similarity score with respect to the working document embedding and each compliance document embedding (e.g., similarity scores for a working document embedding computed via cosine similarity, dot product, Euclidean distance, Manhattan distance, Jaccard similarity with respect to each of the compliance document embeddings), generating a ranked list that orders each compliance document embedding based on their similarity to the working document embedding (e.g., ranking data including a ranked list ordering compliance document embeddings based on similarity to working document embeddings), clustering results with respect to a working document embedding and compliance document embeddings (e.g., clustering results determined via cluster labels, centroid coordinates, silhouette score, etc.), visualization data with respect to a working document embedding and compliance document embeddings (e.g., 2D/3D projections, heatmaps, etc.), evaluation metrics with respect to a working document embedding and compliance document embeddings (e.g., precision, recall, F1-score, accuracy, AUC-ROC, etc.), embedding properties with respect to a working document embedding and compliance document embeddings (e.g., norms, distribution statics, dimensionality, etc.), anomaly scores with respect to a working document embedding and compliance document embeddings (e.g., outlier detection), transformation data with respect to a working document embedding and compliance document embeddings (e.g., aligned embeddings, projection matrices, etc.), or the like. Clause module 224 may determine the compliance score as the similarity score or the ranked list, for example.

In some examples, clause module 224 may initially determine whether the working document embedding is an outlier with respect to the compliance document embeddings in the high-dimensional vector space. In response to clause module 224 determining that the working document embedding is an outlier with respect to the compliance document embeddings when mapped to the high-dimensional vector space, clause module 224 may send an indication to report module 226 that the working document is not compliant. Report module 226 may generate a compliance report that includes the indication that the working document is not compliant with respect to the selected compliance documents.

In some examples, clause module 224 may generate comparison data for the working document. Clause module 224 may generate comparison data for a working document that includes a summary indicating one or more similarities between the working document and selected compliance documents and/or one or more differences between the working document and the plurality of compliance documents. Clause module 224 may generate the comparison data for the working document by applying a machine learning model of machine learning models 222. For example, clause module 224 may apply the machine learning model of machine learning models 222 trained (e.g., by training module 220) to automatically generate a summary of similarities or differences between identified clauses of a working document and identified clauses of selected compliance documents. Clause module 224 may store the comparison data for the working document at comparison data 218.

Report module 226 may determine a compliance report. Report module 226 may determine a compliance report based on identified working document clauses and identified compliance clauses of selected compliance documents. For example, report module 226 may receive, from clause module 224, a comparison score for a working document. Report module 226 may apply a compliance score threshold to determine whether the working document is in compliance with respect to the selected compliance documents. Based on report module 226 determining the compliance score for the working document satisfies the compliance score threshold, report module 226 may determine a compliance report that includes an indication that the working document is compliant. Based on report module 226 determining the compliance score for the working document does not satisfy the compliance score threshold, report module 226 may determine a compliance report that includes an indication that the working document is not compliant.

**In** some examples, report module 226 may determine a compliance report based on comparison data for a working document stored at comparison data 218. Report module 226 may apply a third machine learning model of machine learning models 222 to identify material differences between a working document and selected compliance documents based on comparison data for the working document stored at comparison data 218. For example, report module 226 may apply the third machine learning model of machine learning models 222 to extract summaries from comparison data 218 that correspond to differences between a working document and selected compliance documents that have a real-world consequence. Training module 220 may train the third machine learning model to identify material differences of documents based on training data 274. For example, training module 220 may apply sample comparison data labeled with material differences stored at training data 274 to train the third machine learning model of machine learning models 222 to output a compliance report that identifies material differences between a working document and selected compliance documents. In some examples, training module 220 may train the third machine learning model of machine learning models 222 to identify material differences between working document clauses and compliance clauses based on sample pairs of clauses labeled with material differences included in training data 274 (e.g., training data including a first clause matched to a second clause with a label indicating differences in rights, obligations, or understanding of parties associated with the first clause and second clause). Training module 220 may train the third machine learning model of machine learning models 222 by using training data 274 and refining the third machine learning model via benchmarking (e.g., adjusting weights or biases of the third machine learning model based on a latency score determined using training data 274). Report module 226 may output an indication of a compliance report (e.g., data for a graphical user interface that includes content of the compliance report) to a user device via communication units 215, for example.

In some examples, report module 226 may annotate a working document to identify material differences between the working document and selected compliance documents. Report module 226 may identify one or more portions included within the working document associated with material differences identified from comparison data 218, Report module 226 may annotate the working document by adding, based on the one or more identified portions of the working document, graphical elements that include summaries of differences between the working document and the selected compliance documents that are included in summaries of comparison data 218. For instance, report module 226 may identify specific lines of working document text that correspond to a working document clause that is materially different than a corresponding compliance clause. Report module 226 may add a graphical element (e.g., a comment, a flag, a highlight, etc.) to the identified lines of the working document. In some examples, report module 226 may add a graphical element that includes the summary of differences associated with the identified lines that is stored at comparison data 218.

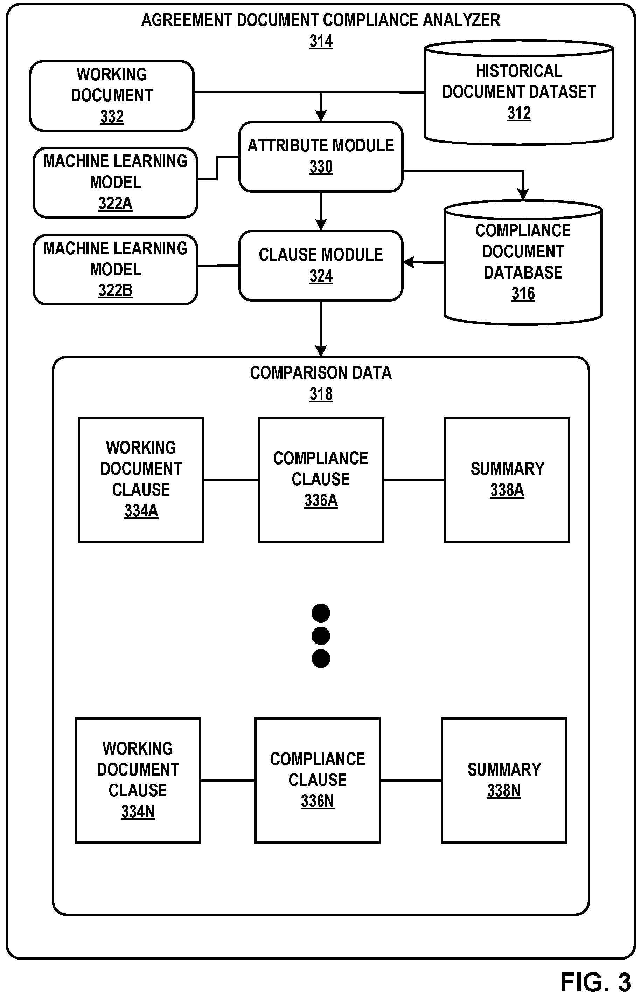

FIG. 3 is a conceptual diagram illustrating example agreement document compliance analyzer 314 for generating comparison data for example electronic working document 332, in accordance with one or more techniques of this disclosure. Agreement document compliance analyzer 314, attribute module 330, clause module 324, compliance document database 316, comparison data 318, historical document dataset 312, and working document 332 of FIG. 3 may be example or alternative implementations of agreement document compliance analyzer 214, attribute module 230, clause module 224, compliance document database 216, comparison data 218, historical document dataset 212, and working document 232 of FIG. 2, respectively.

Agreement document compliance analyzer 314 may provide working document 332 and historical documents of historical document dataset 312 to attribute module 330. Attribute module 330 may apply machine learning model 322A to determine attribute embeddings for working document 332 and historical documents of historical document dataset 312. Machine learning model 322A may extract attributes from working document 332 and historical documents of historical document dataset 312. Machine learning model 322A may encode extracted attributes for working document 332 as a working attribute embedding that characterizes attributes of the working document. Machine learning model 322A may encode extracted attributes for each historical document of historical document dataset 312 as one or more compliance attribute embeddings that characterize attributes of for one or more corresponding historical documents of historical document dataset 312.

Attribute module 330 may map the one or more compliance attribute embeddings to a high-dimensional embedding space. For example, attribute module 330 may map values of the one or more compliance attribute embeddings to a vector space with dimensions that correspond to each attribute characterized by the attribute embeddings. Attribute module 330 may determine compliance document groups based on the mapping of the one or more compliant attribute embeddings to the high-dimensional vector space. For example, attribute module 330 may assign cluster labels to each compliance attribute embedding to assign each compliance attribute embedding to a cluster.

Attribute module 330 may map the working attribute embedding to a compliance document group. For example, attribute module 330 may map, based on values of the working attribute embedding, the working attribute embedding to the high-dimensional vector space the one or more compliance attribute embeddings were mapped to. For instance, attribute module 330 may compare values of the working attribute embedding to values of compliance attribute embeddings when mapped to the high-dimensional vector space. Attribute module 330 may assign the working attribute embedding a cluster label associated with a compliance document group to assign the working attribute embedding to a compliance document group. Attribute module 330 may determine, based on the compliance document group associated with the cluster label the working attribute embedding was assigned, a subset of historical documents that correspond to the cluster label the working attribute embedding was assigned. Attribute module 330 may select the subset of historical documents as compliance documents to the assigned compliance document group. Attribute module 330 may store selected compliance documents and corresponding compliance attribute embeddings at compliance document database 316. In some instances, attribute module 330 may send selected compliance documents from historical document dataset 312, working document 332, and corresponding attribute embeddings to clause module 324.

Clause module 324 may apply machine learning model 322B to determine comparison data 318. For example, clause module 324 may apply machine learning model 322B to identify working document clauses 334A-334N (collectively referred to herein as working document clauses 334) and compliance clauses 336A-336N (collectively referred to herein as compliance clauses 336). Machine learning model 322B may identify working document clauses 334 by chunking semantic information of working document 332 into document objects that include distinct portions of working document 332 as string data structures. Machine learning model 322B may identify working document clauses 334 based on the document objects. For instance, machine learning model 322B may identify working document clauses 334 as one or more document objects within a context window.

Machine learning model 322B may identify compliance clauses 336 by chunking semantic information of selected compliance documents into document objects that include distinct portions of selected compliance document as string data structures. Machine learning model 322B may identify compliance clauses 336 based on the document objects. For instance, machine learning model 322B may identify compliance clauses 336 as one or more document objects within a context window.

Clause module 324 may determine comparison data 318 based on identified working document clauses 334 and compliance clauses 336. For instance, clause module 324 may apply machine learning model 322B to encode identified working document clauses 334 as a working content embedding and encode identified compliance clauses 336 as one or more compliance content embeddings. Machine learning model 322B may map the working content embedding and the one or more compliance content embeddings to a high-dimensional vector space. For example, machine learning model 322B may map the working content embedding and the one or more compliance content embeddings to a vector space with dimensions that correspond to each identified working document clause and identified compliance clauses. Machine learning model 322B may compare the working content embedding to the one or more compliance content embeddings to generate comparison data 318. For example, machine learning model 322B may compare the working content embedding to the one or more compliance content embeddings by matching a working document clause of working document clauses 334 to a compliance clause of compliance clauses 336. In instances where there is a working document clause of working document clauses 334A that does not correspond to a compliance clause of compliance clauses 336, machine learning model 322B may match the working document clause to a null value representing that there is no corresponding compliance clause. Similarly, in instances where there is a compliance clause of compliance clauses 336 that does not correspond to a working document clause of working document clauses 334, machine learning model 322 may match the compliance clause to a null value representing that there is no corresponding working document clause. Clause module 324 may determine the matched working document clauses 334 to corresponding compliance clauses 336 as comparison data 318.

In the example of FIG. 3, clause module 324 may apply machine learning model 322B to determine summaries 338A-338N (collectively referred to herein as summaries 338) for corresponding matches of working document clauses 334 to corresponding compliance clauses 336. Summaries 338 may include a string data structure that identifies similarities or differences between working document 332 and selected compliance documents. Machine learning model 322B may include a generative machine learning model (e.g., a generative large language model) that is trained to generate a summary indicating one or more contextual similarities between working document 332 and selected compliance documents and/or indicating one or more contextual differences between working document 332 and selected compliance documents. For example, machine learning model 322B may generate summary 338A as a string data structure with text that summarizes similarities or differences between content, verbiage, intent, terms, or other semantic information of working document clause 334A and compliance clause 336A. Clause module 324 may determine comparison data 318 to include arrays, lists, or other data structures of working document clause, compliance clause, and corresponding summary pairs.

Agreement document compliance analyzer 314 may determine a compliance report for working document 332 based on comparison data 318. For instance, agreement document compliance analyzer 314 may generate a compliance report to include portions of comparison data 318 associated with material differences between working document 332 and selected compliance documents. In some instances, agreement document compliance analyzer 314 may determine material differences based on content of summaries 338. For example, comparison data 318 may include summary 338A that indicates that working document clause 334A specifies that payment is due 30 days after execution while compliance clause 336A specifies that payment is due upon delivery. Agreement document compliance analyzer 314 may apply a machine learning model to determine whether the difference between working document clause 334A and compliance clause 336A, as indicated in summary 338A, is a material difference in terms of whether the rights, obligations, or understanding of working document clause 334A differs from compliance clause 336A. Agreement document compliance analyzer 314 may apply a traditional machine learning model that is trained to classify a difference as a material difference based on whether a difference indicated in a summary of summaries 338 is material. Agreement document compliance analyzer 314 may determine a difference indicated in a summary of summaries 338 is not material based on the difference not affecting the rights, obligations, or understanding of a respective clause. For example, comparison data 318 may include summary 338B that indicates that working document clause 334B specifies "a buyer" in a formal tone while compliance clause 336B specifies "a purchaser" in a casual tone. Agreement document compliance analyzer 314 may apply the traditional machine learning model to classify the difference indicated in summary 338B as not material in terms of the rights, obligations, or understanding of working document clause 334B does not differ from compliance clause 336B. In some instances, agreement document compliance analyzer 314 may determine whether a difference indicated in a summary of summaries 338 is a material difference by comparing similarity scores calculated with respect to values of a working content embedding associated with a working document clause and values of a compliance content embedding associated with a matched compliance clause. In response to a similarity score for a working document clause and compliance clause not satisfying a threshold, agreement document compliance analyzer 314 may determine a difference between the working document clause and the compliance clause is material.

In some examples, agreement document compliance analyzer 314 may identify clauses included in a working document but not included in a plurality of compliance clauses and/or identify clauses included in the plurality of compliance clauses but not included in the working document. Agreement document compliance analyzer 314 may bypass, based on determining a missing clause, determining whether there is a material difference with respect to the unmatched clause. For example, summary 338N may include a string data structure identifying that working document clause 334N is a null value representing that working document 332 does not include a working document clause corresponding to compliance clause 336N. Agreement document compliance analyzer 314 may preemptively determine that summary 338N identifies a material difference between working document 332 and selected compliance documents. For instance, agreement document compliance analyzer 314 may determine that summary 338N - indicating that working document clause 334N is a null value - is a material difference between working document 332 and selected compliance documents without applying a machine learning model to compare content of clauses between working document 332 and selected compliance documents and/or calculating a comparison score for working document clauses of working document 332 and compliance clauses. In this way, agreement document compliance analyzer 314 may determine a compliance report using fewer computational resources (e.g., processing cycle, memory usage, power consumption etc.).

Agreement compliance analyzer 314 may determine the compliance report to include an indication of the material difference between working document 332 and selected compliance documents. Agreement compliance analyzer 314 may send the compliance report to a user device of an entity (e.g., user device 108A of entity 110 of FIG. 1). In some examples, agreement document compliance analyzer 314 may identify a portion of working document 332 corresponding to the identified material differences and add a graphical element to working document 332 that includes one or more summaries of summaries 338 that correspond to the identified material differences. By only including identified material differences in a compliance report, agreement compliance analyzer 314 may output a concise compliance report that identifies a reduced set of differences between a working document and a compliance report based on whether identified differences are material, rather than outputting a compliance report that lists all differences between a working document and compliance documents.

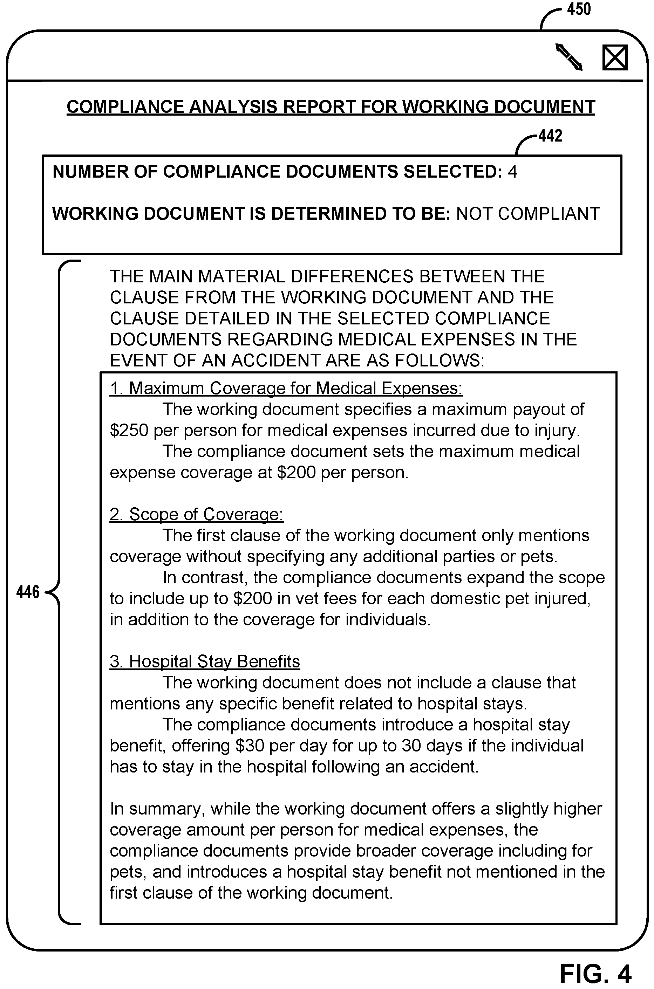

FIG. 4 is a conceptual diagram illustrating example graphical user interface 450 for displaying an example compliance report, in accordance with techniques of this disclosure. FIG. 4 may be discussed with respect to FIG. 2 for example purposes only.

Report module 226 of agreement document compliance analyzer 214 may generate data for graphical user interface 450 that includes a compliance report for a working document. Report module 226 may generate graphical user interface 450 to include indication of compliance 442 and graphical element 446. Indication of compliance 442 may include an indication of whether a working document is compliant with respect to selected compliance documents. In the example of FIG. 4, report module 226 may determine indication of compliance 442 to include a number of selected compliance documents ("4") and a determination of whether a working document is compliant ("NOT COMPLIANT"). Graphical element 446 may include a summary of differences between a working document and selected compliance included in comparison data 218. In the example of FIG. 4, report module 226 may determine graphical element 446 as portions of comparison data 218 associated with differences between a working document and selected compliance documents regarding medical expenses in the event of an accident.

Report module 226 may determine graphical element 446 based on comparison data 218. For instance, report module 226 may apply a machine learning model of machine learning models 222 trained to identify summaries of comparison data 218 that correspond to material differences associated with differences in context, verbiage, intent, or other semantic information between a working document and selected compliance documents. Report module 226 may apply the machine learning model of machine learning models 222 to identify, based on summaries of comparison data that correspond to material differences associated with differences between the working document and selected compliance document, one or more portions included within the working document associated with the material differences between the working document and the plurality of compliance documents. For example, report module 226 may identify clause headers, text, sentences, and/or paragraphs of the working document as portions of the working document associated with the material differences by, for example, applying a machine learning model (e.g., a large language model) trained to partition working documents based on comparison data. Report module 226 may generate, based on the one or more portions of the working document, graphical element 446 as a string data structure that summarizes determined material differences between the working document and selected compliance documents. In some examples, report module 226 may add graphical element 446 to the working document based on the one or more portions of the working document associated with material differences summarized in graphical element 446.

Report module 226 may determine graphical element 446 based on comparison data 218. For instance, report module 226 may apply a machine learning model of machine learning models 222 trained to identify summaries of comparison data 218 that correspond to material differences associated with differences in context, verbiage, intent, or other semantic information between a working document and selected compliance documents. Report module 226 may apply the machine learning model of machine learning models 222 to generate graphical element 446 as a string data structure that summarizes determined material differences between the working document and selected compliance documents.

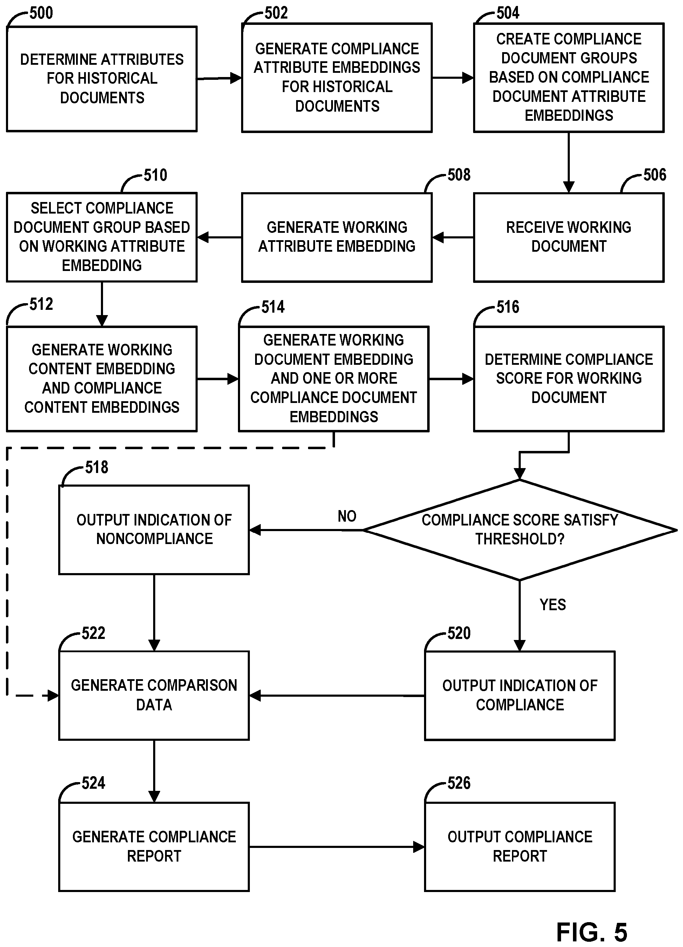

FIG. 5 is a conceptual diagram illustrating an example operation of hierarchical compliance analysis of an electronic working document, in accordance with techniques of this disclosure. FIG. 5 may be discussed with respect to FIG. 1 for example purposes only.

Document management platform 102 may determine attributes for historical documents (500). Document management platform 102 may determine attributes for historical document that correspond to an agreement type identifier, a deal size identifier, a counterparty identifier, a product identifier, a product quantity, or a geographical region identifier. Document management platform 102 may determine attributes for historical documents by, for example, applying natural language processing techniques to identify fields of historical documents that correspond to attributes for the historical documents. Document management platform may apply the natural language processing techniques to extract field values from the identified fields as attributes for the historical documents.

Document management platform 102 may generate compliance attribute embeddings for the historical document (502). Document management platform 102 may generate a compliance attribute embedding for a historical document that captures or characterizes the determined attributes for the historical document in a high-dimensional vector space. Document management platform 102 may create compliance document groups based on compliance attribute embeddings (504). For instance, document management platform 102 may apply a clustering algorithm to cluster or group compliance attribute embeddings for each historical document into compliance document groups.

Document management platform 102 may receive a working document (506). Document management platform 102 may receive a working document from user device 108A, for example. Document management platform 102 may receive a working document that is generated to include attribute for the working document. For example, document management platform 102 may generate an initial working document based on a template that defines attributes for the working document. Document management platform 102 may provide the initial working document to user device 108A. A user operating user device 108A may edit or otherwise modify the initial working document (e.g., based on negotiated language). User device 108A may send the modified working document to document management platform 102 as a working document. Document management platform 102 may determine, based on identified fields of the working document, the attributes for the working document. Document management platform 102 may determine attributes for a working document such as an agreement type identifier, a deal size identifier, a counterparty identifier, a product identifier, a product quantity, or a geographical region identifier. By performing a compliance analysis based on a working document generated using a template, document management platform 102 may reduce computational resources (e.g., processing usage) associated with identifying attributes based on text of a working document.

Document management platform 102 may generate a working attribute embedding (508). Document management platform 102 may generate a working attribute embedding that characterizes or captures the determined attributes for the working document in a high-dimensional vector space. Document management platform 102 may generate a working attribute embedding for a working document by applying a machine learning model trained to encode attribute for the working document in the high-dimensional vector space.

Document management platform 102 may select a compliance document group based on the working attribute embedding (510). For example, document management platform 102 may map the working attribute embedding to a compliance document group. Document management platform 102 may map the working attribute embedding to a compliance document group by plotting the working attribute embedding to the high-dimensional vector space in which each compliance attribute embedding was mapped to. Document management platform 102 may assign a label to the working document based on the compliance document group the working attribute embedding was mapped to. Document management platform 102 may select the compliance documents as the historical documents associated with the compliance document group that the working attribute embedding was mapped to.

Document management platform 102 may generate a working content embedding and compliance content embeddings (512). Document management platform 102 may generate a working content embedding by identifying working document clauses of the working document. Document management platform 102 may similarly generate one or more compliance content embeddings by identifying compliance clauses of the selected compliance documents. Document management platform 102 may apply a machine learning model trained to identify clauses of documents such as clauses of agreement documents, definitions of agreement document terms, scope of agreement documents, obligations included in agreement documents, consideration included in agreement documents, term or termination of agreement document, amendments of agreement documents, notices of agreement documents, schedules of agreement documents, and appendices of agreement documents. Document management platform 102 may apply a machine learning model to encode identified clauses into content embeddings that capture or characterize semantic information of the identified clauses in a high-dimensional vector space.

Document management platform 102 may generate a working document embedding and one or more compliance document embeddings (514). Document management platform 102 may generate a working document embedding by concatenating or combining the working content embedding and the working attribute embedding. Document management platform 102 may similarly generate a compliance document embedding for a selected compliance document by combining or concatenating the compliance content embedding for the selected compliance document and the corresponding compliance attribute embedding for the selected compliance document. In some instances, document management platform 102 may apply Principal Component Analysis to reduce or compress the dimensionality of the working document embedding and the one or more compliance document embeddings to a target size.

Document management platform 102 may determine a compliance score for the working document (516). Document management platform 102 may determine a compliance score for the working document based on a comparison of the working document embedding to each compliance document embedding. For example, document management platform 102 may apply a machine learning model configured to calculate a similarity score between the working document embedding and each of the compliance document embeddings. Document management platform 102 may determine a compliance score for the working document as an average, median, etc. of the determined similarity scores.

Document management platform 102 may output an indication of noncompliance (518). For example, based on document management platform 102 determining the compliance score for the working document does not satisfy a compliance score threshold, document management platform 102 may generate a compliance report that include an indication that the working document is not compliant. Document management platform 102 may output the indication that the working document is not compliant to the user device that requested a compliance analysis of the working document (e.g., user device 108A).

Document management platform 102 may output an indication of compliance (520). For example, based on document management platform 102 determining the compliance score for the working document satisfies a compliance score threshold, document management platform 102 may generate a compliance report that include an indication that the working document is compliant. Document management platform 102 may output the indication that the working document is compliant to the user device that requested a compliance analysis of the working document (e.g., user device 108A).

Document management platform 102 may generate comparison data (522). Document management platform 102 may generate comparison data to include one or more summaries indicating one or more similarities between the working document and the selected compliance documents and/or one or more differences between the working document and the selected compliance documents. Document management platform 102 may apply a machine learning model to compare semantic information of identified working document clauses to that of identified compliance clauses. For example, document management platform 102 may apply the machine learning model to analyze differences and/or similarities between the working document embedding and the compliance document embeddings. Document management platform 102 may generate comparison data as an array, list, or other data structure that includes correlations between identified working document clauses, identified compliance clauses, and generated summaries of similarities and/or differences between the working document clauses and compliance clauses. In one example, document management platform 102 may perform process according to steps illustrated in FIG. 5. In some examples, document management platform 102 may optionally bypass Steps 516-520 to generate comparison data following Step 514 (as shown by the dashed line). For example, document management platform 102 may receive (e.g., at Step 506) a request to output a compliance report that includes summaries of material differences between a working document and historical documents, without a cursory indication of whether the working document is compliant.

Document management platform 102 may generate a compliance report (524). Document management platform 102 may generate a compliance report to include an indication of whether the working document is compliant and/or summaries of similarities or differences between the working document and selected compliance documents. Document management platform 102 may generate a compliance report as data for a graphical user interface, such as graphical user interface 450 of FIG. 4. Document management platform 102 may output the compliance report (526). Document management platform 102 may output the compliance report for the working document to a user device (e.g., user device 108A) that requested a compliance scan for the working document. Document management platform 102 may output the compliance report to the user device via network 111, for example.

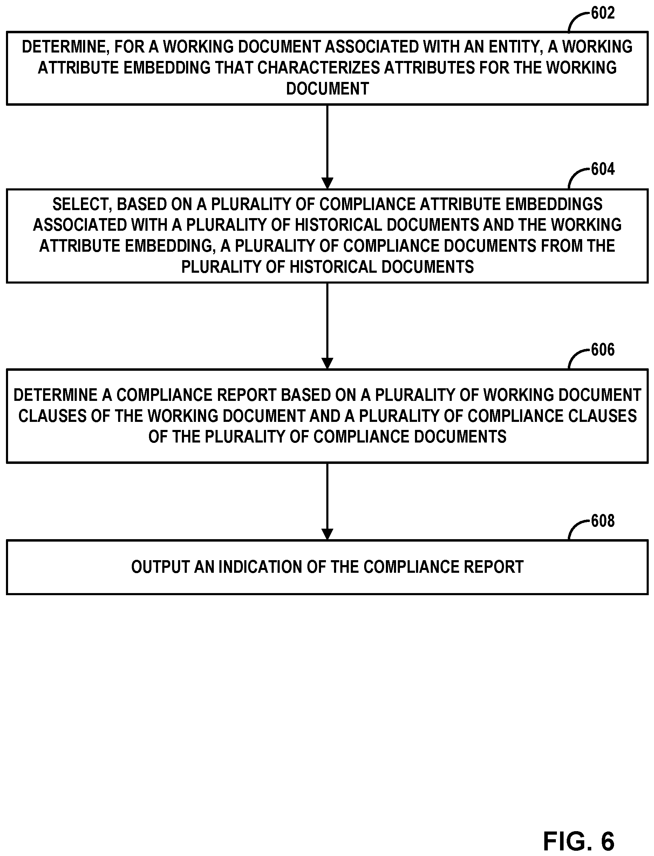

FIG. 6 is a flow chart illustrating an example operation for hierarchical compliance analysis of electronic working documents, in accordance with techniques of this disclosure. FIG. 6 may be discussed with respect to FIG. 1 for example purposes only.

Document management platform 102 may determine, for a working document associated with the entity, a working attribute embedding that characterizes attributes for the working document (602). A working attribute embedding may characterize or capture attributes for a working document, such as an agreement type identifier associated with the working document, a deal size identifier associated with the working document, a counterparty identifier associated with the working document, a product identifier associated with the working document, a product quantity associated with the working document, a geographical region identifier associated with the working document. In some examples, document management platform 102 may generate, based on a template, the working document to include the attributes for the working document. For instance, document management platform 102 may use a template to generate a working document to include attributes for the working document as metadata for the working document. In some examples, document management platform 102 may use a template to generate a working document that includes attributes for the working document as identified field values corresponding to each attribute for the working document. Document management platform 102 may determine, based on identified field values of the working document, attributes for the working document. Document management platform 102 may extract the attributes for the working document from content included in the working document. Document management platform 102 may generate, based on the attributes for the working document, the working attribute embedding for the working document.

Document management platform 102 may select, based on a plurality of compliance attribute embeddings associated with a plurality of historical documents and the working attribute embedding, a plurality of compliance documents from the plurality of historical documents (604). Document management platform 102 may determine, for each historical document of the plurality of historical document, a compliance attribute embedding to generate the plurality of compliance attribute embeddings, wherein each of the plurality of compliance attribute embeddings characterize attributes for a respective historical document. Compliance attribute embeddings may characterize or capture attributes for a historical document, such as an agreement type identifier associated with the historical document, a deal size identifier associated with the historical document, a counterparty identifier associated with the historical document, a product identifier associated with the historical document, a product quantity associated with the historical document, a geographical region identifier associated with the historical document. Document management platform 102 may determine a compliance attribute embedding for a historical document by, for example, extracting attributes for the historical document from content included in the historical document. Document management platform 102 may generate, based on the attributes for the historical document, the compliance attribute embedding for the historical document.

In some examples, document management platform 102 may generate a plurality of compliance document groups based on each compliance attribute embedding of the plurality of compliance attribute embeddings. Document management platform 102 may generate a compliance documents group to include an indication to one or more respective historical documents of the plurality of historical documents. Document management platform 102 may map, based on values of the working attribute embedding, the working attribute embedding to a compliance document group of the plurality of compliance document groups. Document management platform 102 may determine, based on the compliance document group the working document mapped to, the subset of historical documents. Document management platform 102 may select the subset of historical documents as the plurality of compliance documents.

Document management platform 102 may determine a compliance report based on a plurality of working document clauses of the working document and a plurality of compliance clauses of the plurality of compliance documents (606). Document management platform 102 may identify a plurality of working document clauses of the working document. For example, document management platform 102 may determine a plurality of document objects for the working document. Document management platform 102 may determine document objects that correspond to chunks of textual data that represent distinct content of the working document. Document management platform 102 may identify, based on the document objects, working document clauses of the working document. Document management platform 102 may identify working document clauses that may include one or more determined document objects. Document management platform 102 may determine working document clauses such as clauses of agreement documents, definitions of agreement document terms, scope of agreement documents, obligations included in agreement documents, consideration included in agreement documents, term or termination of agreement document, amendments of agreement documents, notices of agreement documents, schedules of agreement documents, appendices of agreement documents, or the like.

Document management platform 102 may identify a plurality of compliance clauses of the plurality of compliance documents. For example, document management platform 102 may determine document objects for each selected compliance document. Document management platform 102 may determine document objects that correspond to chunks of textual data that represent distinct content of each selected compliance document. Document management platform 102 may identify, based on the determined document objects for each selected compliance document, compliance clauses of each selected compliance document. Document management platform 102 may identify a compliance clause to include one or more determined document objects. Document management platform 102 may determine compliance clauses such as clauses of agreement documents, definitions of agreement document terms, scope of agreement documents, obligations included in agreement documents, consideration included in agreement documents, term or termination of agreement document, amendments of agreement documents, notices of agreement documents, schedules of agreement documents, appendices of agreement documents, or the like.

Document management platform 102 may determine, based on identified working document clauses of the working document, a working content embedding. Document management platform 102 may determine a working content embedding that characterizes or captures semantic information of identified working document clauses in a high-dimensional vector space. Document management platform 102 may determine, based on the identified compliance clauses of the selected compliance documents, a plurality of compliance content embeddings. Document management platform 102 may determine a compliance content embedding that characterizes or captures semantic information of identified compliance clauses of a respective compliance document in a high-dimensional vector space. Document management platform 102 may determine, based on the working content embedding and each compliance content embedding of the plurality of compliance content embeddings, a compliance score for the working document. Document management platform 102 may determine a compliance report based on the compliance score. In some examples, document management platform 102 may further determine the compliance report based on comparison data. Document management platform 102 may generate comparison data based on comparisons of the identified working document clauses to identified compliance clauses. Document management platform 102 may generate comparison data that includes a summary indicating one or more similarities between the working document and the selected compliance documents and/or one or more differences between the working document and the selected compliance documents.

Document management platform 102 may output an indication of the compliance report (612). For example, based on document management platform 102 determining a compliance score for a working document satisfies a compliance score threshold, document management platform 102 may output an indication that the working document is compliant. Based on document management platform 102 determining a compliance score for a working document does not satisfy a compliance score threshold, document management platform 102 may output an indication that the working document is not compliant. In some examples, document management platform 102 may output an indication of the compliance report as a graphical user interface (GUI 450 of FIG. 4) that includes summaries of material differences identified in comparison data for the working document. In some instances, document management platform 102 may identify, based on the comparison data for the working document, one or more portions within the working document associated with the material differences between the working document and the selected compliance documents. Document management platform 102 may add, to the working document and based on the one or more portions of the working document, graphical elements that include summaries of the material differences between the working document and the selected compliance documents.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing an understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects and/or embodiments of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects and/or embodiments of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:
Embodiment 1. A system for hierarchical compliance analysis of electronic working documents, the system comprising:
   processing circuitry; and
   computer readable media comprising instructions that, when executed, cause the processing circuitry to:
      determine, for a working document associated with an entity, a working attribute embedding that characterizes attributes for the working document;
      select, based on a plurality of compliance attribute embeddings associated with a plurality of historical documents and the working attribute embedding, a plurality of compliance documents from the plurality of historical documents;
      determine a compliance report based on a plurality of working document clauses of the working document and a plurality of compliance clauses of the plurality of compliance documents; and
      output an indication of the compliance report.
Embodiment 2. The system of embodiment 1, wherein to generate the working attribute embedding, the instructions cause the processing circuitry to:
   extract the attributes for the working document from content included in the working document; and
   generate, based on the attributes for the working document, the working attribute embedding.
Embodiment 3. The system of embodiment 1 or 2, wherein to select the plurality of compliance documents, the instructions cause the processing circuitry to: determine, for each historical document of the plurality of historical documents, a compliance attribute embedding to generate the plurality of compliance attribute embeddings, wherein each of the plurality of compliance attribute embeddings characterize attributes for a respective historical document;
   generate a plurality of compliance document groups based on the plurality of compliance attribute embeddings, each compliance document group of the plurality of compliance document group including an indication to one or more respective historical documents of the plurality of historical documents;
   map, based on values of the working attribute embedding, the working attribute embedding to a compliance document group of the plurality of compliance document groups;
   determine, based on the compliance document group, the subset of historical documents; and select the subset of historical documents as the plurality of compliance documents.
Embodiment 4. The system of any of embodiments 1 to 3, wherein, the instructions further cause the processing circuitry to:
   determine a plurality of distinct portions of the working document; and identify, based on chunking the plurality of distinct portions, the plurality of working document clauses of the working document.
Embodiment 5. The system of any of embodiments 1 to 4, wherein the plurality of working document clauses include one or more of provisions of the working document, definitions of the working document, amendments of the working document, notices of the working document, schedules of the working document, or appendices of the working document.
Embodiment 6. The system of any of embodiments 1 to 5, wherein to determine the compliance report, the instructions cause the processing circuitry to:
   determine, based on the plurality of working document clauses of the working document, a working content embedding;
   determine, for each compliance document of the plurality of compliance documents, a compliance content embedding to generate a plurality of compliance content embeddings,
   wherein each of the plurality of compliance content embeddings characterize respective compliance clauses of the plurality of compliance clauses;
   determine, based on the working content embedding and the plurality of compliance content embeddings, a compliance score for the working document;
   determine, based on the compliance score for the working document, whether the working document is compliant; and
   output an indication of whether the working document is compliant.
Embodiment 7. The system of any of embodiments 1 to 6, wherein the instructions further cause the processing circuitry to:
   generate, based on the plurality of working document clauses of the working document and the plurality of compliance clauses of the plurality of compliance documents, comparison data including a summary indicating a difference between a working document clause of the plurality of working document clauses and a compliance clause of the plurality of compliance clauses;
   determine, based on the summary, the difference between the working document clause and the compliance clause is a material difference; and
   wherein to determine the compliance report, the instructions cause the processing circuitry to determine, further based on the comparison data, the compliance report to include an indication of the material difference.
Embodiment 8. The system of embodiment 7, wherein the instructions further cause the processing circuitry to:
   identify, based on the comparison data, one or more portions included within the working document associated with the material differences between the working document and the plurality of compliance documents; and
   add, to the working document and based on the one or more portions of the working document, graphical elements including summaries of the differences between the working document and the plurality of compliance documents.
Embodiment 9. The system of any of embodiments 1 to 8, wherein the working document attributes for the working document include one or more of an agreement type identifier, a price term identifier, a counterparty identifier, a product identifier, a product quantity, or a geographical region identifier.
Embodiment 10. The system of any of embodiments 1 to 9, wherein the instructions further cause the processing circuitry to:
   generate, based on a template defining a first attribute for the working document, the working document;
   identify, based on the working document, a field value of the working document associated with a second attribute; and
   determine, based at least on the field value and the template, the attributes for the working document, the attributes for the working document including the first attribute and the second attribute.
Embodiment 11. A method comprising:
   determining, by processing circuitry, for a working document associated with an entity, a working attribute embedding that characterizes attributes for the working document; selecting, by the processing circuitry, based on a plurality of compliance attribute embeddings associated with a plurality of historical documents and the working attribute embedding, a plurality of compliance documents from the plurality of historical documents; determining, by the processing circuitry, a compliance report based on a plurality of working document clauses of the working document and a plurality of compliance clauses of the plurality of compliance documents; and
   outputting, by the processing circuitry, an indication of the compliance report.
Embodiment 12. The method of embodiment 11, wherein determining the working attribute embedding comprises:
   extracting the attributes for the working document from content included in the working document; and
   generating, based on the attributes for the working document, the working attribute embedding.
Embodiment 13. The method of embodiment 11 or 12, wherein selecting the plurality of compliance documents comprises:
   determining, for each historical document of the plurality of historical documents, a compliance attribute embedding to generate the plurality of compliance attribute embeddings,
   wherein each of the plurality of compliance attribute embeddings characterize attributes for a respective historical document;
   generating a plurality of compliance document groups based on the plurality of compliance attribute embeddings, each compliance document group of the plurality of compliance document group including an indication to one or more respective historical documents of the plurality of historical documents;
   mapping, based on values of the working attribute embedding, the working document attribute embedding to a compliance document group of the plurality of compliance document groups;
   determining, based on the compliance document group, the subset of historical documents; and
   selecting the subset of historical documents as the plurality of compliance documents.
Embodiment 14. The method of any of embodiments 11 to 13, further comprising:
   determining a plurality of distinct portions of the working document; and
   identifying, based on chunking the plurality of distinct portions, the plurality of working document clauses of the working document.
Embodiment 15. The method of any of embodiments 11 to 14, wherein determining the compliance report comprises:
   determining, based on the plurality of working document clauses of the working document, a working content embedding;
   determining, for each compliance document of the plurality of compliance documents, a compliance content embedding to generate a plurality of compliance content embeddings,
   wherein each of the plurality of compliance content embeddings characterize respective compliance clauses of the plurality of compliance clauses;
   determining, based on the working content embedding and the plurality of compliance content embeddings, a compliance score for the working document;
   determining, based on the compliance score for the working document, whether the working document is compliant; and
   outputting an indication of whether the working document is compliant.
Embodiment 16. The method of any of embodiments 11 to 15, further comprising:
   generating, based on the plurality of working document clauses of the working document and the plurality of compliance clauses of the plurality of compliance documents, comparison data including a summary indicating a difference between the working document and the plurality of compliance documents;
   determining, based on the summary, the difference between the working document and the plurality of compliance documents is a material difference; and
   wherein determining the compliance report comprises determining, further based on the comparison data, the compliance report to include an indication of the material difference.
Embodiment 17. Computer-readable media encoded with instructions that, when executed, cause processing circuitry to:
   determine, for a working document associated with an entity, a working attribute embedding that characterizes attributes for the working document;
   select, based on a plurality of compliance attribute embeddings associated with a plurality of historical documents and the working attribute embedding, a plurality of compliance documents from the plurality of historical documents;
   determine a compliance report based on a plurality of working document clauses of the working document and a plurality of compliance clauses of the plurality of compliance documents; and
   output an indication of the compliance report.
Embodiment 18. The computer-readable media of embodiment 17, wherein to select the plurality of compliance documents, the instructions cause the processing circuitry to:
   determine, for each historical document of the plurality of historical documents, a compliance attribute embedding to generate the plurality of compliance attribute embeddings, wherein
   each of the plurality of compliance attribute embeddings characterize attributes for a respective historical document;
   generate a plurality of compliance document groups based on the plurality of compliance attribute embeddings, each compliance document group of the plurality of compliance document group including an indication to one or more respective historical documents of the plurality of historical documents;
   map, based on values of the working attribute embedding, the working document attribute embedding to a compliance document group of the plurality of compliance document groups; determine, based on the compliance document group, the subset of historical documents; and select the subset of historical documents as the plurality of compliance documents.
Embodiment 19. The computer-readable media of embodiment 17 or 18, wherein to determine the compliance report, the instructions cause the processing circuitry to: determine, based on the plurality of working document clauses of the working document, a working content embedding;
   determine, for each compliance document of the plurality of compliance documents, a compliance content embedding to generate a plurality of compliance content embeddings, wherein each of the plurality of compliance content embeddings characterize respective compliance clauses of the plurality of compliance clauses;
   determine, based on the working content embedding and the plurality of compliance content embeddings, a compliance score for the working document;
   determine, based on the compliance score for the working document, whether the working document is compliant; and
   output an indication of whether the working document is compliant.
Embodiment 20. The computer-readable media of any of embodiments 17 to 19, wherein the instructions further cause the processing circuitry to:
   generate, based on the plurality of working document clauses of the working document and the plurality of compliance clauses of the plurality of compliance documents, comparison data including a summary indicating a difference between the working document and the plurality of compliance document;
   determine, based on the summary, the difference between the working document and the plurality of compliance documents is a material difference; and
   wherein to determine the compliance report, the instructions cause the processing circuitry to determine, further based on the comparison data, the compliance report to include an indication of the material difference.
Embodiment 21. The method of embodiment 11, further comprising steps corresponding to the functionality of the system recited in any of embodiments 2 to 10 or using a system according to any of claims 2 to 10.
Embodiment 22. Computer-readable media comprising instructions that, when executed by one or more programmable processors, cause the one or more programmable processors to perform the method recited by any of embodiments 11 or 12.

## Claims

1. A system for hierarchical compliance analysis of electronic working documents, the system comprising:
processing circuitry; and
computer readable media comprising instructions that, when executed, cause the processing circuitry to:
determine, for a working document associated with an entity, a working attribute embedding that characterizes attributes for the working document;
select, based on a plurality of compliance attribute embeddings associated with a plurality of historical documents and the working attribute embedding, a plurality of compliance documents from the plurality of historical documents;
determine a compliance report based on a plurality of working document clauses of the working document and a plurality of compliance clauses of the plurality of compliance documents; and
output an indication of the compliance report.

2. The system of claim 1, wherein to generate the working attribute embedding, the instructions cause the processing circuitry to:
extract the attributes for the working document from content included in the working document; and
generate, based on the attributes for the working document, the working attribute embedding.

3. The system of any of claims 1 or 2, wherein to select the plurality of compliance documents, the instructions cause the processing circuitry to:
determine, for each historical document of the plurality of historical documents, a compliance attribute embedding to generate the plurality of compliance attribute embeddings, wherein each of the plurality of compliance attribute embeddings characterize attributes for a respective historical document;
generate a plurality of compliance document groups based on the plurality of compliance attribute embeddings, each compliance document group of the plurality of compliance document group including an indication to one or more respective historical documents of the plurality of historical documents;
map, based on values of the working attribute embedding, the working attribute embedding to a compliance document group of the plurality of compliance document groups;
determine, based on the compliance document group, the subset of historical documents; and
select the subset of historical documents as the plurality of compliance documents.

4. The system of any of claims 1 to 3, wherein, the instructions further cause the processing circuitry to:
determine a plurality of distinct portions of the working document; and
identify, based on chunking the plurality of distinct portions, the plurality of working document clauses of the working document.

5. The system of any of claims 1 to 4, wherein the plurality of working document clauses include one or more of provisions of the working document, definitions of the working document, amendments of the working document, notices of the working document, schedules of the working document, or appendices of the working document.

6. The system of any of claims 1 to 5, wherein to determine the compliance report, the instructions cause the processing circuitry to:
determine, based on the plurality of working document clauses of the working document, a working content embedding;
determine, for each compliance document of the plurality of compliance documents, a compliance content embedding to generate a plurality of compliance content embeddings, wherein each of the plurality of compliance content embeddings characterize respective compliance clauses of the plurality of compliance clauses;
determine, based on the working content embedding and the plurality of compliance content embeddings, a compliance score for the working document;
determine, based on the compliance score for the working document, whether the working document is compliant; and
output an indication of whether the working document is compliant.

7. The system of any of claims 1 to 6, wherein the instructions further cause the processing circuitry to:
generate, based on the plurality of working document clauses of the working document and the plurality of compliance clauses of the plurality of compliance documents, comparison data including a summary indicating a difference between a working document clause of the plurality of working document clauses and a compliance clause of the plurality of compliance clauses;
determine, based on the summary, the difference between the working document clause and the compliance clause is a material difference; and
wherein to determine the compliance report, the instructions cause the processing circuitry to determine, further based on the comparison data, the compliance report to include an indication of the material difference.

8. The system of claim 7, wherein the instructions further cause the processing circuitry to:
identify, based on the comparison data, one or more portions included within the working document associated with the material differences between the working document and the plurality of compliance documents; and
add, to the working document and based on the one or more portions of the working document, graphical elements including summaries of the differences between the working document and the plurality of compliance documents.

9. The system of any of claims 1 to 8, wherein the working document attributes for the working document include one or more of an agreement type identifier, a price term identifier, a counterparty identifier, a product identifier, a product quantity, or a geographical region identifier.

10. The system of any of claims 1 to 9, wherein the instructions further cause the processing circuitry to:
generate, based on a template defining a first attribute for the working document, the working document;
identify, based on the working document, a field value of the working document associated with a second attribute; and
determine, based at least on the field value and the template, the attributes for the working document, the attributes for the working document including the first attribute and the second attribute.

11. A method comprising:
determining, by processing circuitry, for a working document associated with an entity, a working attribute embedding that characterizes attributes for the working document;
selecting, by the processing circuitry, based on a plurality of compliance attribute embeddings associated with a plurality of historical documents and the working attribute embedding, a plurality of compliance documents from the plurality of historical documents;
determining, by the processing circuitry, a compliance report based on a plurality of working document clauses of the working document and a plurality of compliance clauses of the plurality of compliance documents; and
outputting, by the processing circuitry, an indication of the compliance report.

12. The method of claim 11, further comprising steps corresponding to the functionality of the system recited in any of claims 2 to 10 or using a system according to any of claims 2 to 10.

13. Computer-readable media comprising instructions that, when executed by one or more programmable processors, cause the one or more programmable processors to perform the method recited by any of claims 11 or 12.
